(19) Europäisches Patentamt
European Patent Office
Office européen des brevets

(11) EP 4 198 094 A1

(12) **EUROPÄISCHE PATENTANMELDUNG**

(43) Veröffentlichungstag:
**21.06.2023 Patentblatt 2023/25**

(21) Anmeldenummer: **21215960.2**

(22) Anmeldetag: **20.12.2021**

(51) Internationale Patentklassifikation (IPC):
***C09D 5/00*** ***(2006.01)***

(52) Gemeinsame Patentklassifikation (CPC):
**C09D 5/00; C09D 5/02**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Reyer, Robert**
  **40764 Langenfeld (DE)**
- **Nazaran, Pantea**
  **51375 Leverkusen (DE)**
- **Cendlewski, Dorothea**
  **51766 Engelskirchen (DE)**
- **Baeker, Thomas**
  **50859 Köln (DE)**

(74) Vertreter: **Levpat**
**c/o Covestro AG**
**Gebäude K12**
**51365 Leverkusen (DE)**

(54) **MEHRSCHICHTAUFBAU AUF METALLISCHEN UNTERGRÜNDEN BASIEREND AUF POLYASPARTATBESCHICHTUNGEN**

(57) Die vorliegende Erfindung betrifft einen Schichtaufbau, umfassend mindestens eine teilweise gehärtete oder vollständig gehärtete Beschichtungszusammensetzung für einen pigmentierten Lack (Bp) und mindestens eine darauf applizierte Beschichtungszusammensetzung für einen Klarlack ($B_K$), wobei die Beschichtungszusammensetzung Bp mindestens eine Polyasparaginsäure-haltige Komponente, mindestens ein Silanfunktionelles Polyisocyanat und mindestens ein Pigment enthält und die Beschichtungszusammensetzung $B_K$ ebenfalls mindestens eine Polyasparaginsäure-haltige Komponente und mindestens ein Polyisocyanat enthält.

Die vorliegende Erfindung betrifft weiterhin ein Schichtsystem, umfassend ein Substrat, mindestens eine auf mindestens einen Teil des Substrats aufgetragene, teilweise gehärtete oder vollständig gehärtete Beschichtungszusammensetzung Bp und mindestens eine darauf applizierte Beschichtungszusammensetzung $B_K$, Verfahren zum Herstellen eines gehärteten Schichtaufbaus auf einem bevorzugt metallischen Substrat, sowie ein Schichtsystem umfassend ein bevorzugt metallisches Substrat und einen Schichtaufbau, erhältlich nach diesem Herstellverfahren.

EP 4 198 094 A1

## Beschreibung

Die vorliegende Erfindung betrifft einen Schichtaufbau, umfassend mindestens eine teilweise gehärtete oder vollständig gehärtete Beschichtungszusammensetzung für einen pigmentierten Lack ($B_P$) und mindestens eine darauf applizierte Beschichtungszusammensetzung für einen Klarlack ($B_\kappa$), wobei die Beschichtungszusammensetzung $B_P$ mindestens eine Polyasparaginsäure-haltige Komponente, mindestens ein Silanfunktionelles Polyisocyanat und mindestens ein Pigment enthält und die Beschichtungszusammensetzung $B_\kappa$ ebenfalls mindestens eine Polyasparaginsäure-haltige Komponente und mindestens ein Polyisocyanat enthält.

Die vorliegende Erfindung betrifft weiterhin ein Schichtsystem, umfassend ein Substrat, mindestens eine auf mindestens einen Teil des Substrats aufgetragene, teilweise gehärtete oder vollständig gehärtete Beschichtungszusammensetzung $B_P$ und mindestens eine darauf applizierte Beschichtungszusammensetzung $B_\kappa$, Verfahren zum Herstellen eines gehärteten Schichtaufbaus auf einem bevorzugt metallischen Substrat, sowie ein Schichtsystem umfassend ein bevorzugt metallisches Substrat und einen Schichtaufbau, erhältlich nach diesem Herstellverfahren.

Innerhalb der Polyurethan-Beschichtungstechnologie haben sich in den letzten Jahren bestimmte, estergruppenhaltige, sekundäre Polyamine etabliert, die sich in Kombination mit Lackpolyisocyanaten insbesondere als Bindemittel in lösemittelarmen oder -freien (high solids) Beschichtungsmitteln eignen und eine rasche Aushärtung der Beschichtungen bei niedrigen Temperaturen ermöglichen. Bei diesen sekundären Polyaminen handelt es sich um die sogenannten Polyasparaginsäureester, wie sie beispielhaft in der EP0403921 beschrieben werden. Ihre Verwendung, gegebenenfalls in einem Gemisch mit weiteren, gegenüber Isocyanatgruppen reaktionsfähigen Komponenten in Beschichtungsmitteln wird beispielsweise in der EP0403921, EP0639628, EP0667362, EP0689881, US5214086, EP0699696, EP0596360, EP0893458, DE19701835 und US5243012 beschrieben.

Gehärtete Beschichtungen auf Basis solcher Polyasparaginsäure-haltiger Beschichtungsmittel weisen allerdings eine schlechte Haftung auf kritischen metallischen Oberflächen auf. Es wurden daher entsprechende Beschichtungsmittel, die zu Beschichtungen mit verbesserter Haftung führen, entwickelt. Ein solches Beschichtungsmittel ist in der WO 2010/112157 A1 beschrieben. Es handelt sich dabei um ein Beschichtungsmittel auf Basis Allophanatgruppenaufweisender silanmodifizierter Polyispocyanate in Abmischung mit Polyasparaginsäureestern. Die Beschichtungsmittel enthalten Pigmente und können mehrfach aufgetragen werden, so dass Mehrschichtsysteme erhalten werden, die in allen Schichten Pigmente enthalten. Es hat sich aber gezeigt, dass diese Systeme nach der Härtung eine unzureichende Glanzhaltung bei Bewitterung und eine unzureichende Wasserbeständigkeit aufweisen.

Die Aufgabe der vorliegenden Erfindung bestand daher in der Bereitstellung von Mehrschichtsystemen, die nach der Härtung eine gute Haftung auf kritischen metallischen Oberflächen aufweisen und darüberhinaus eine gute Glanzhaltung bei Bewitterung und eine hohe Wasserbeständigkeit aufweisen. Diese Aufgabe wurde durch die nachfolgend beschriebenen, erfindungsgemäßen Schichtaufbauten gelöst.

KR-2018-0036827 A beschreibt ein Mehrschichtsystem aus einem Primer auf Basis silanmodifizierter Polyisocyanate und Aspartate und einem Aspartat-basierten Decklack, wobei in allen Schichten Pigmente enthalten sind. Das Mehrschichtsystem dient der Beschichtung von Gebäuden.

WO 2014/138052 A1 beschreibt Mehrschichtsysteme, bei denen die einzelnen Schichten auf Polyaspartaten und mit Epoxidgruppen modifizierten Silanen und Polyisocyanaten basieren. Die Deckschicht enthält Pigmente.

Ein Schichtaufbau gemäß nachfolgender Beschreibung, der nach der Härtung eine gute Haftung auf kritischen metallischen Oberflächen und darüberhinaus eine gute Glanzhaltung bei Bewitterung, sowie eine hohe Wasserbeständigkeit garantiert, ist in keinem dieser Dokumente offenbart, noch aus einem dieser Dokumente oder irgendeiner Kombination dieser Dokumente nahegelegt.

Gegenstand der vorliegenden Erfindung ist ein Schichtaufbau, umfassend oder bestehend aus mindestens eine/r teilweise gehärtete/n oder vollständig gehärtete/n Beschichtungszusammensetzung für einen pigmentierten Lack ($B_P$) und mindestens eine/r darauf applizierte/n Beschichtungszusammensetzung für einen Klarlack ($B_K$), wobei

i) die mindestens eine Beschichtungszusammensetzung $B_P$ folgende Komponenten enthält:

A) mindestens eine Polyasparaginsäureester-haltige Komponente, enthaltend

A1) einen oder mehrere Polyasparaginsäureester der allgemeinen Formel (I)

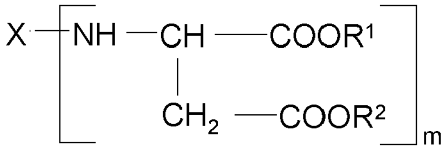

(I),

in welcher

X für einen m-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann,

$R^1$ und $R^2$ für gleiche oder verschiedene organische Reste, mit je 1 bis 18 Kohlenstoffatomen stehen,

m für eine ganze Zahl >1 steht,

und

A2) gegebenenfalls einen oder mehrere Polyasparaginsäureester mit primärer Aminogruppe der allgemeinen Formel (II)

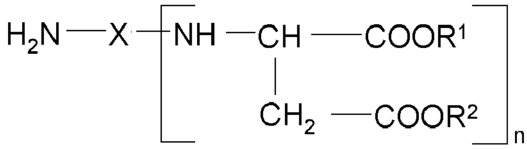

(II),

in welcher

n für m-1 steht,

X und die Reste $R^1$ und R2 die oben genannten Bedeutungen haben,

und

A3) gegebenenfalls einen oder mehrere Fumarsäuredialkylester,

B) gegebenenfalls mindestens eine, von A verschiedene, gegenüber Isocyanatgruppen reaktionsfähige Komponente,

C) mindestens ein silanfunktionelles Polyisocyanat, enthaltend mindestens eine Silangruppe der allgemeinen Formel (III)

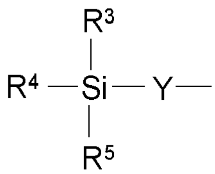

(III),

in welcher

$R^3$, $R^4$ und $R^5$ für gleiche oder verschiedene Reste stehen und jeweils einen gesättigten oder ungesättigten, linearen oder verzweigten, aliphatischen oder cycloaliphatischen oder einen gegebenenfalls

substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und

Y für einen linearen oder verzweigten organischen Rest mit mindestens 2 Kohlenstoffatomen steht, der gegebenenfalls bis zu 2 Iminogruppen (-NH-) enthalten kann,

D) gegebenenfalls mindestens ein, von C verschiedenes, Polyisocyanat
E) mindestens ein Pigment,
F) gegebenenfalls weitere Hilfs- und Zusatzstoffe, und

ii) die mindestens eine Beschichtungszusammensetzung $B_K$ folgende Komponenten enthält:

G) mindestens eine Polyasparaginsäureester-haltige Komponente, enthaltend

G1) einen oder mehrere Polyasparaginsäureester der allgemeinen Formel (IV)

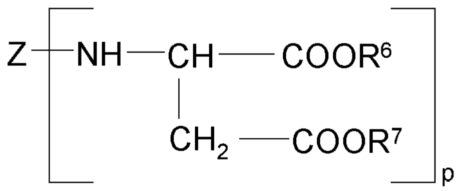

(IV),

in welcher

Z für einen p-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann,

$R^6$ und $R^7$ für gleiche oder verschiedene organische Reste, mit je 1 bis 18 Kohlenstoffatomen stehen,

p für eine ganze Zahl >1 steht,

und

G2) gegebenenfalls einen oder mehrere Polyasparaginsäureester mit primärer Aminogruppe der allgemeinen Formel (V)

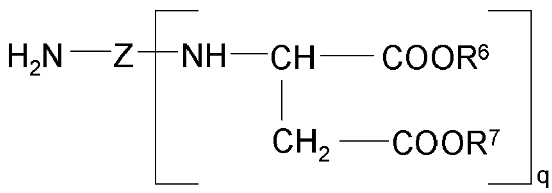

(V),

in welcher

q für p-1 steht,

Z und die Reste $R^6$ und $R^7$ die oben genannten Bedeutungen haben,

und

G3) gegebenenfalls einen oder mehrere Fumarsäuredialkylester,

H) gegebenenfalls mindestens eine, von G verschiedene, gegenüber Isocyanatgruppen reaktionsfähige Komponente,

I) mindestens ein Polyisocyanat,

J) gegebenenfalls Hilfs- und Zusatzstoffe.

Beschichtungszusammensetzung für einen pigmentierten Lack ($B_P$)

Polyasparaginsäureester-haltige Komponente A

Stand der Technik: Die Herstellung von aminofunktionellen Asparaginsäureestern ist im Prinzip bekannt. Die Synthese erfolgt über eine Addition von primären Polyaminen an eine aktivierte Kohlenstoff-Doppelbindung vinyloger Carbonylverbindungen, wie beispielsweise in Malein- oder Fumarsäureestern enthalten, die in der Literatur hinreichend beschrieben ist (Hauben Weyl, Meth. d. Org. Chemie Bd. 11/1, 272 (1957), Usp. Khim. 1969, 38, 1933). Bei dieser Reaktion kann es zur Bildung eines Polyasparaginsäureester mit primären Aminogruppen als Nebenprodukt kommen, wenn nur eine Aminogruppe des Polyamins mit der Doppelbindung der vinylogen Carbonylverbindungen reagiert hat. In den kommerziell erhältlichen Polyasparaginsäureestern wird Maleinsäureester als die vinyloge Carbonylverbindung eingesetzt. Während der Herstellung eines Polyasparaginsäureester auf Basis von Maleinsäureester kann eine retro-Michael Addition als eine weitere unerwünschte Nebenreaktion erfolgen, bei der durch Eliminierung des Polyamins als Nebenkomponente Fumarsäuredialkylester gebildet wird. Fumarsäuredialkylester können eine starke Sensibilisierung verursachen und sind beispielsweise als VOC (volatile organic compounds) klassifiziert. Sie sollten daher möglichst aus dem Produkt eliminiert werden, bevor dieses an den Kunden geliefert wird. Ein typisches Herstellverfahren eines Polyasparaginsäureesters erfordert daher eine Lagerzeit von 4-6 Wochen nachdem der Hauptteil der Edukte miteinander reagiert hat. In dieser Zeit erfolgt die sogenannte Reifung des Produktes, welche sich durch Stabilisierung der Viskosität manifestiert. Dadurch, dass der Umsatz innerhalb dieser Zeit weiter steigt, sinkt auch der Gehalt an Fumarsäuredialkylester. Diese Lagerung über mehrere Wochen führt zu erheblichen Logistik-Kosten innerhalb der Produktion. Darüberhiunaus enthält das Produkt trotz der Lagerung oft immer noch substantielle Mengen an Fumarsäuredialkylester. In den letzten Jahren wurden spezielle Destillationsmethoden entwickelt, mit denen der Fumarsäuredialkylestergehalt der Produkte ohne langwierige Lagerung auf deutlich niedrigere Werte reduziert werden kann (WO 2019/057621 A1 und WO 2019/0576217 A1).

Bevorzugt enthalten die erfindungsgemäß einzusetzenden Polyasparaginsäureester-haltige Komponenten A einen oder mehrere Polyasparaginsäureester der allgemeinen Formeln (I) und gegebenenfalls (II) bei denen $R^1$ und $R^2$ für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste stehen. Am meisten bevorzugt ist Ethyl.

Polyasparaginsäureester-haltige Komponenten A enthalten einen oder mehrere Polyasparaginsäureester der allgemeinen Formeln (I) und gegebenenfalls (II), bei denen X sich von Polyaminen der allgemeinen Formel (VI) ableitet:

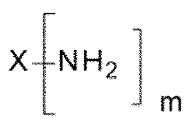

(VI),

wobei X

für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann, und

m für eine ganze Zahl > 1, bevorzugt für 2 steht.

Beispielhaft seien die folgenden Verbindungen genannt: Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa DuPont), 1,6-Diaminohexan, 2,2,4- und/oder 2,4,4-Trimethyl-1,6-diaminohexan, 1,11-Diaminoundecan, 1,12-Diaminododecan oder Triaminononan, Etheramine, wie z.B. 4,9-dioxadodecane-1,12-diamine, 4,7,10-trioxatridecane-1,13-diamine, oder höhermolekulare Polyetherpolyamine mit aliphatisch gebundenen, primären Aminogruppen, wie sie beispielsweise unter der Bezeichnung Jeffamin® von der Firma Huntsman vertrieben werden. Ebenfalls einsetzbar sind aliphatische polyzyklische Polyamine, wie Tricyclodecanbismethylamin (TCD-Diamin) oder Bis(aminomethyl)norbornane, amino-funktionelle Siloxane, z.B. Diaminopropylsiloxan G10 DAS (Fa. Momentive), Fettalkyl-basierte Amine, wie z.B. Fentamine der Fa. Solvay, Dimerfettsäurediamine wie z.B Priamine der Fa. Croda.

Bevorzugt enthalten Polyasparaginsäureester-haltige Komponenten A einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (VI) erhalten wird, worin m = 2 bedeutet und X für einen cyclischen Kohlenwasserstoffrest mit mindestens einem cyclischen Kohlenstoffring steht. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H6-TDA), Isopropyl-2,4-diaminocyclohexan, und/oder Isopropyl-2,6-diaminocyclohexan, 1,3-Bis-(aminomethyl)-cyclohexan, 2,4'-, und/oder 4,4'-Diamino-dicyclohexylmethan, 3,3'-Dimethyl-4,4'-diamino-dicyclohexylmethan (Laromin® C 260, Fa. BASF AG), die isomere, eine Methylgruppe als Kernsubstituenten aufweisende Diaminodicyclohexylmethane (=C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol oder m-Xylylendiamin.

Ebenfalls bevorzugt enthalten Polyasparaginsäureester-haltige Komponenten A einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (VI) erhalten wird, ausgewählt aus der Gruppe: Polyetherpolyamine mit aliphatisch gebundenen primären Aminogruppen, 1,2 Diaminopropan, 1,4-Diaminobutan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 1,5-Diaminopentan, 2,4'- und/oder 4,4'-Diamino-dicyclohexylmethan oder 3,3'-Dimethyl-4,4'-diamino-dicyclohexylmethan. Besonders bevorzugt sind 3,3'-Dimethyl-4,4'-diamino-dicyclohexylmethan, 1,5-Diaminopentan, 2,4'- und/oder 4,4'-Diaminodicyclohexylmethan, 1,5-Diamino-2-methylpentan und ganz besonders bevorzugt ist die Verwendung von 2,4'- und/oder 4,4'-Diaminodicyclohexylmethan.

Besonders bevorzugt enthalten Polyasparaginsäureester-haltige Komponenten A einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (VI) erhalten wird, ausgewählt aus der Gruppe: Polyetherpolyamine mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'diamino-dicyclohexylmethan.

Ganz besonders bevorzugt enthalten Polyasparaginsäureester-haltige Komponenten A einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (VI) erhalten wird, ausgewählt aus der Gruppe: 3,3'-Dimethyl-4,4'diaminodicyclohexylmethan, 2,4'- und/oder 4,4'-Diaminodicyclohexylmethan, 1,5-Diamino-2-methylpentan.

Sofern die Polyasparaginsäureester-haltige Komponente A einen oder mehrere Polyasparaginsäureester der allgemeinen Formel (II) enthält, so ist dieser/ sind diese mit einem Anteil von > 0%, bevorzugt mindestens 0,1% (≥ 0,1%), besonders bevorzugt mindestens 1% (≥ 1%), ganz besonders bevorzugt mindestens 4% (≥ 4%), und bevorzugt von maximal 20% (≤ 20%), besonders bevorzugt maximal 15% (≤ 15%) der GC Oberfläche (gemessen als Flächen-% im Gas Chromatogram) enthalten, wobei die Summe der GC Oberflächen der Verbindungen der beiden allgemeinen Formeln (I) und (II) 100% beträgt. Die angegebenen Ober- und Untergrenzen sind beliebig kombinierbar. Es gelten alle möglichen Kombinationen als offenbart.

Sofern die Polyasparaginsäureester-haltige Komponente A Fumarsäuredialkylester (Komponente A3) enthält, so liegt dieser/liegen diese in Mengen von > 0% Gew.-%, bevorzugt ≥ 0,01 bis ≤ 3 Gew.-%, mehr bevorzugt ≥ 0,01 bis ≤ 1,5 Gew.-%, noch mehr bevorzugt ≥ 0,01 bis ≤ 1,3 Gew.-%, darüberhinaus bevorzugt ≥ 0,01 bis ≤ 1 Gew.-%, am meisten bevorzugt ≥ 0,01 bis <0,1 Gew.-%, bezogen auf das Gesamtgewicht der Komponente A, vor.

Bevorzugt enthalten Polyasparaginsäureester-haltige Komponenten A einen oder mehrere Polyasparaginsäureester der allgemeinen Formel (I) und gegebenenfalls Formel (II), wobei die Ester eine Platin-Cobalt-Farbzahl ≤ 200, besonders bevorzugt ≤ 100 aufweisen. Die Messung der Platin-Cobalt-Farbzahl erfolgt gemäß DIN EN ISO 6271:2016-05.

Die erfindungsgemäß zu verwendenden Polyasparaginsäureester-haltigen Komponenten A können durch das folgende Verfahren hergestellt werden:

Umsetzung von Polyaminen der allgemeinen Formel (VI),

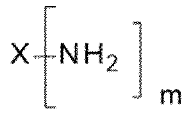

(VI),

wobei X

für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann,
m für eine ganze Zahl > 1, bevorzugt für 2 steht,

mit Verbindungen der allgemeinen Formel (VII)

$$R^1OOC—CH=CH—COOR^2 \quad (VII),$$

wobei $R^1$ und $R^2$
für gleiche oder verschiedene organische Reste, vorzugsweise für gleiche oder verschiedene Alkylreste mit je 1 bis 18 Kohlenstoffatomen, besonders bevorzugt für gleiche oder verschiedene Alkylreste mit je 1 bis 8 Kohlenstoffatomen, ganz besonders bevorzugt für jeweils Alkylreste wie Methyl-, Ethyl-, Propyl-, iso-Propyl-, Butyl- oder iso-Butyl-Reste und am meisten bevorzugt für Ethyl stehen,

und einer destillativen Entfernung des nicht umgesetzten Anteils an der Verbindung der allgemeinen Formel (VII).

Vorzugsweise erfolgt das oben beschriebene Verfahren zur Herstellung der Polyasparaginsäureester-haltigen Komponenten A in zwei Schritten. Im ersten Schritt werden die Verbindungen der allgemeinen Formel (VI) und (VII) bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (VI) zu den C=C-Doppelbindungsäquivalenten der Verbindungen der allgemeinen Formel (VII) von 1:1.2 bis 1.2:1, vorzugsweise jedoch 1:1.05 bis 1.05:1, besonders bevorzugt 1:1, bis zu einem Restgehalt an Verbindungen der allgemeinen Formel (VII) von 2 bis 15 Gew.-Prozent, bevorzugt von 3 bis 10 Gew.-Prozent umgesetzt.

Im zweiten Schritt wird der nicht umgesetzte Anteil an der Verbindungen der allgemeinen Formel (VII) destillativ entfernt.

Polyasparaginsäureester-haltige Komponenten A, die nur Polyasparaginsäureester der allgemeinen Formel (I) enthalten, nicht jedoch der Formel (II), bzw. die nahezu frei sind von Polyasparaginsäureestern der allgemeinen Formel (II), lassen sich analog herstellen, wobei jedoch mit einem Überschuss an Verbindungen der allgemeinen Formel (VII) gearbeitet wird, d.h. in einem Verhältnis der Äquivalente der primären Aminogruppen der Verbindungen der allgemeinen Formel (VI) zu den C=C-Doppelbindungsäquivalenten der Verbindungen der allgemeinen Formel (VII) von 1:10, bevorzugt 1:5, besonders bevorzugt 1:2.

Geeignete Bedingungen während der Destillation sind ein Druckbereich zwischen 0.01 und 2 mbar und eine Temperatur des Sumpfablaufs beim Austritt aus der Destillationsapparatur ≤ 170°C und ≥ der Temperatur liegt, die sich aus der folgenden Formel (VIII) ergibt:

$$T(\text{Sumpfablauf}) = 27 \times \ln(p) + 150 \quad (VIII)$$

wobei

| | |
|---|---|
| T(Sumpfablauf) | für die Temperatur des Sumpfablaufs in °C und |
| p | für den Druck in der Destillationsapparatur in mbar stehen. |

Durch Einhalten dieses Druckbereichs wird gewährleistet, dass einerseits moderate Temperaturen im Sumpfablauf ausreichen, um die Fumarsäuredialkylester im gewünschten Umfang abzureichern, andererseits das Verfahren im technischen Maßstab anwendbar bleibt. Bei geringerem Druck wird die Gasdichte zu gering und die erforderlichen Apparate deshalb so groß, dass das Verfahren aus wirtschaftlicher Sicht nachteilig wird.

Bevorzugt ist die Temperatur des Sumpfablaufs ≤ 170°C, dabei jedoch mindestens 20 K oberhalb der Temperatur, die sich aus der Formel (VIII) ergibt, besonders bevorzugt liegt sie zwischen 20 K und 40 K oberhalb der Temperatur, die sich aus der Formel (VIII) ergibt, jedoch nicht oberhalb von 170°C.

Bezüglich Beispielen und Vorzugsbereichen der Polyamine der allgemeinen Formel (VI), die in dem oben beschriebenen Verfahren eingesetzt werden können, verweisen wir auf die vorangegangenen Ausführungen.

Bevorzugte Verbindungen der allgemeinen Formel (VII), die in dem oben beschriebenen Verfahren Anwendung finden sind Malein- oder Fumarsäureester der allgemeinen Formel (VII), worin $R^1$ und $R^2$ für gleiche oder verschiedene organische Reste mit je 1 bis 18 Kohlenstoffatomen stehen. Bevorzugt stehen $R^1$ und $R^2$ unabhängig voneinander für lineare oder verzweigte Alkylreste mit 1 bis 8 Kohlenstoffatomen, besonders bevorzugt für jeweils Alkylreste wie Methyl-, Ethyl-, Propyl-, iso-Propyl-, Butyl- oder iso-Butyl-Reste und ganz besonders bevorzugt für Ethyl.

Beispielhaft für Verbindungen der allgemeinen Formel (VII) seien die folgenden Verbindungen genannt: Maleinsäuredimethylester, -diethylester, -di-n oder -iso-propylester, -di-n-butylester, -di-2-ethyl-hexylester oder die entsprechenden Fumarsäureester. Ganz besonders bevorzugt ist Maleinsäurediethylester.

Komponenten B

Neben der mindestens einen Polyasparaginsäureester-haltigen Komponente A kann die Beschichtungszusammensetzung $B_P$ weitere gegenüber Isocyanatgruppen reaktionsfähige Komponenten (B) enthalten.

Dies können beispielsweise niedermolekulare Polyole des Molekulargewichtsbereichs von 62 bis 300 g/mol, beispielsweise Ethylenglykol, Propylenglykol, Trimethylolpropan, Glycerin oder Gemische dieser Alkohole, oder Polyhydroxyverbindungen eines über 300 g/mol, bevorzugt über 400 g/mol, besonders bevorzugt eines zwischen 400 und 20000 g/mol liegenden Molekulargewichts sein. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Polyurethan-, Carbonat- und Polyacrylatpoloyolen und Gemischen aus derartigen Polyolen ausgewählt sind. Bevorzugt sind Polyhydroxylverbindungen der oben genannten Art.

Komponenten C

Die Beschichtungszusammensetzung Bp enthält als Komponente C mindestens ein silanfunktionelles Polyisocyanat, enthaltend mindestens eine Silangruppe der allgemeinen Formel (III)

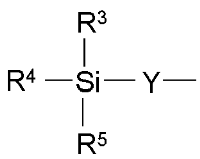

(III),

in welcher

| | |
|---|---|
| $R^3$, $R^4$ und $R^5$ | für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und |
| Y | für einen linearen oder verzweigten organischen Rest mit mindestens 2 Kohlenstoffatomen steht, der gegebenenfalls bis zu 2 Iminogruppen (-NH-) enthalten kann. |

Bevorzugt werden silanfunktionelle Polyisocyanate (C) eingesetzt, die erhältlich sind durch Umsetzung (C1) mindestens eines Polyisocyanats mit

($C2_1$) mindestens einer gegenüber Isocyanatgruppen reaktiven Verbindung der allgemeinen Formel (IX)

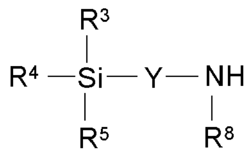

(IX),

in welcher

$R^3$, $R^4$, $R^5$ und Y die für Formel (III) genannte Bedeutung haben, und

$R^8$ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen steht, oder für

i) einen Rest der Formel

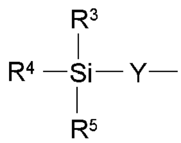

steht, in welchem $R^3$, $R^4$ und $R^5$ und Y die für Formel (III) genannte Bedeutung haben, oder für

ii) einen Rest der Formel

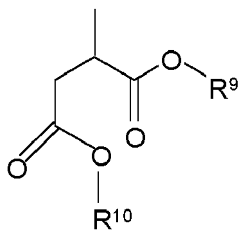

steht, in welchem $R^9$ und $R^{10}$ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen können,

iii) einen Rest der Formel

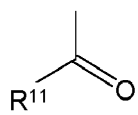

steht, in welcher $R^{11}$ für Wasserstoff oder einen gesättigten linearen oder verzweigten, aliphatischen oder cycloaliphatischen organischen Rest mit 1 bis 8 Kohlenstoffatomen steht,

oder der allgemeinen Formel (X)

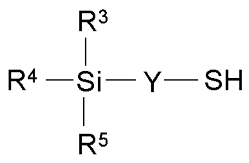

(X),

in welcher $R^3$, $R^4$ und $R^5$ die für Formel (III) genannte Bedeutung haben und

Y für einen linearen oder verzweigten organischen Rest mit mindestens 2 Kohlenstoffatomen steht,

oder

($C2_2$) mindestens einem -aus der Reaktion von Aminosilanen mit cyclischen Carbonaten bzw. Lactonen erhältlichen-Silangruppen aufweisenden Hydroxyurethan und/oder Hydroxyamid.

Polyisocyanate C1

Als Ausgangsverbindungen C1 zur Herstellung der silanfunktionellen Polyisocyanate (C) geeignet sind beliebige monomere Diisocyanate der mit aliphatisch, cycloaliphatisch, araliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können. Geeignete monomere Diisocyanate sind beispielsweise solche der allgemeinen Formel (XI)

OCN—Q—NCO (XI),

in welcher Q für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 5 bis 18 Kohlenstoffatomen steht, wie z. B. 1,4-Diisocyanatobutan, 1,5-Diisocyanatopentan (PDI), 1,6-Diisocyanatohexan (HDI), 1,5-Diisocyanato-2,2-dimethylpentan, 2,2,4-bzw. 2,4,4-Trimethyl-1,6-diisocyanatohexan, 1,8-Diisocyanatooctan, 1,9-Diisocyanatononan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan ($H_{12}$-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136. Besonders bevorzugt sind monomere Diisocyanate der allgemeinen Formel (IV), in welcher Z für einen linearen oder verzweigten, aliphatischen oder cycloaliphatischen Rest mit 5 bis 13 Kohlenstoffatomen steht.

Ganz besonders bevorzugte monomere Diisocyanate zur Herstellung der silanfunktionellen Polyisocyanate (C) sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Als Ausgangsverbindungen C1 zur Herstellung der silanfunktionellen Polyisocyanate (C) geeignet sind, neben den oben genannten monomeren Diisocyanaten, auch beliebige durch Modifizierung von monomeren aliphatischen, cycloaliphatischen, araliphatischen und/oder aromatischen Diisocyanaten erhältliche oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate. Die Herstellung dieser oligomeren Verbindungen erfolgt nach an sich bekannten Methoden zur Isocyanatoligomerisierung, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530,

EP-A 2 174 967, JP 63260915 und JP 56059828 beispielhaft beschrieben sind. Als monomere Diisocyanate können beispielsweise die zuvor aufgelisteten Diisocyanate eingesetzt werden. Es gelten die dort genannten Vorzugsbereiche.

Gegenüber Isocyanatgruppen reaktive (kurz auch Isocyanat-reaktive) Verbindungen $C2_1$

Geeignete Ausgangsverbindungen $C2_1$ zur Herstellung der der silanfunktionellen Polyisocyanate (C) sind beispielsweise Aminosilane, der allgemeinen Formel (IX)

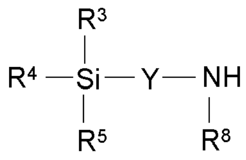

(IX),

in welcher
$R^3$, $R^4$, $R^5$, $R^8$ und Y die vorangehend für Formel (IX) beschriebene Bedeutung haben.

Geeignete Aminosilane der allgemeinen Formel (IX) sind beispielsweise 3-Aminopropyltrimethoxysilan, 3-Amino-propyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3 -Aminopropyltripropoxysilan, 3 -Aminopropyltributoxysilan, 3 -Aminopropylphenyldiethoxysilan, 3 -Aminopropylphenyldimethoxysilan, 3 -Aminopropyl-tris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3 -methylbutyl)methyldimethoxysilan, 4-Amino(3-methylbutyl)methyldiethoxysilan, 4-Amino(3 -methylbutyl)trimethoxysilan, 3 -Aminopropylphenylmethyl-n-propoxysilan, 3 -Aminopropylmethyldibutoxysilan, 3 -Aminopropyldiethylmethylsilan, 3 -Aminopropylmethyl-bis(trimethylsiloxy)silan, 11-Aminoundecyltrimethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimetoxysilan, 3-(3-Amino-propoxy)-3,3-dimethyl-1-propenyltrimethoxysilan, 3-Aminopropylmethylbis(trimethylsiloxy)-silan, 3-Aminopropyltris(trimethyl-siloxy)-silan, 3-Aminopropylpentamethyldisiloxan oder beliebige Gemisch solcher Aminosilane.

Darunter bevorzugt sind Aminosilane der allgemeinen Formel (IX), in welcher

| | |
|---|---|
| $R^3$, $R^4$ und $R^5$ | jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste $R^1$, $R^2$ und $R^3$ für einen solchen Alkoxyrest steht, |
| Y | für einen linearen oder verzweigten organischen Rest mit mindestens 2 Kohlenstoffatomen steht, und |
| $R^8$ | für einen gesättigten, linearen oder verzweigten, aliphatischen oder cycloaliphatischen Rest mit bis zu 6 Kohlenstoffatomen oder einen Rest der Formel |

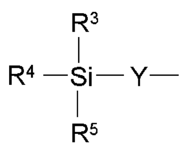

steht, in welchem $R^3$, $R^4$ und $R^5$ und Y die vorstehend angegebene Bedeutung haben.

Darunter besonders bevorzugte sind Aminosilane der allgemeinen Formel (IX), in welcher

| | |
|---|---|
| $R^3$, $R^4$ und $R^5$ | jeweils Methyl, Methoxy und/oder Ethoxy bedeuten, mit der Maßgabe, dass mindestens einer der Reste $R^1$, $R^2$ und $R^3$ für einen Methoxy- oder Ethoxyrest steht, |
| Y | für einen Propylenrest ($-CH_2-CH_2-CH_2-$) steht, und |

| | |
|---|---|
| $R^8$ | für einen linearen Alkylrest mit bis zu 4 Kohlenstoffatomen oder einen Rest der |

Formel

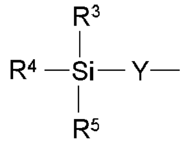

steht, in welchem $R^3$, $R^4$ und $R^5$ und Y die vorstehend angegebene Bedeutung haben.

Darunter ganz besonders bevorzugt sind N-Methyl-3-aminopropyltrimethoxysilan, N-Methyl-3-aminopropyltriethoxysilan, N-(n-Butyl)-3-aminopropyltrimethoxysilan, N-(n-Butyl)-3-amino-propyltriethoxysilan, Bis(3-trimethoxysilylpropyl)-amin und/oder Bis(3-triethoxysilylpropyl)amin.

Bevorzugte Aminosilane der allgemeinen Formel (IX) sind beispielsweise auch solche, bei denen

| | |
|---|---|
| $R^3$, $R^4$ und $R^5$ | jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste $R^3$, $R^4$ und $R^5$ für einen solchen Alkoxyrest steht, |
| Y | für einen linearen oder verzweigten organischen Rest mit mindestens 2 Kohlenstoffatomen steht, und |
| $R^8$ | für einen Rest der Formel |

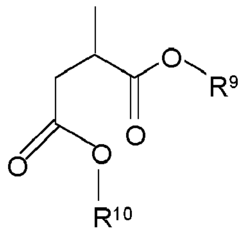

steht, in welchem

$R^9$ und $R^{10}$ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Darunter besonders bevorzugt sind Aminosilane der allgemeinen Formel (IX), in welcher

| | |
|---|---|
| $R^3$, $R^4$ und $R^5$ | jeweils Methyl, Methoxy und/oder Ethoxy bedeuten, mit der Maßgabe, dass mindestens einer der Reste $R^3$, $R^4$ und $R^5$ für einen Methoxy- oder Ethoxyrest steht, |
| Y | für einen Propylenrest ($-CH_2-CH_2-CH_2-$) steht, und |
| $R^8$ | für einen Rest der Formel |

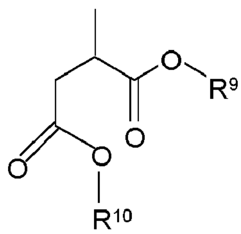

steht, in welchem $R^9$ und $R^{10}$ unabhängig voneinander für einen Methyl-, Ethyl-, n-Butyl- oder 2-Ethylhexylrest stehen.

Bei diesen Aminosilanen handelt es sich um die bekannten silanfunktionellen Asparaginsäureester, wie sie sich nach der Lehre der EP-A 0 596 360 durch Umsetzung von primäre Aminogruppen tragenden Aminosilanen mit Fumarsäureestern und/oder Maleinsäureestern erhalten lassen.

Geeignete Ausgangsverbindungen zu Herstellung dieser silanfunktionellen Asparaginsäureester sind daher grundsätzlich beliebige Aminosilane der allgemeinen Formel (IX)

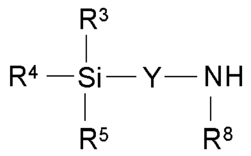

(IX),

in welcher $R^3$, $R^4$, $R^5$ und Y die für Formel (IX) genannte Bedeutung haben und $R^8$ für Wasserstoff steht.

Diese werden mit Fumarsäurediestern und/oder Maleinsäurediestern der allgemeinen Formel (XII)

$$R^9OOC-CH=CH-COOR^{10} \quad (XII),$$

umgesetzt, in welcher die Reste $R^9$ und $R^{10}$ die oben genannte Bedeutung haben.

Ganz besonders bevorzugte silanfunktionellen Asparaginsäureester sind Umsetzungsprodukte von 3-Aminopropyltrimethoxysilan und/oder 3-Aminopropyltriethoxysilan mit Maleinsäurediethylester.

Bevorzugte Aminosilane der allgemeinen Formel (IX) sind weiterhin auch solche, bei denen

| | |
|---|---|
| $R^3$, $R^4$ und $R^5$ | jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste $R^3$, $R^4$ und $R^5$ für einen solchen Alkoxyrest steht, |
| Y | für einen linearen oder verzweigten organischen Rest mit mindestens 2 Kohlenstoffatomen steht, und |
| $R^8$ | für einen Rest der Formel |

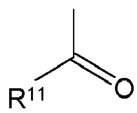

steht, in welchem $R^{11}$ für Wasserstoff oder einen gesättigten linearen oder verzweigten, aliphatischen oder cycloaliphatischen organischen Rest mit 1 bis 8 Kohlenstoffatomen steht.

Darunter besonders bevorzugt sind Aminosilane der allgemeinen Formel (IX), in welcher

| | |
|---|---|
| $R^3$, $R^4$ und $R^5$ | jeweils Methyl, Methoxy und/oder Ethoxy bedeuten, mit der Maßgabe, dass mindestens einer der Reste $R^3$, $R^4$ und $R^5$ für einen Methoxy- oder Ethoxyrest steht, |
| Y | für einen Propylenrest ($-CH_2-CH_2-CH_2-$) steht, und |
| $R^8$ | für einen Rest der Formel |

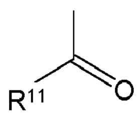

steht, in welchem
$R^{11}$ für Wasserstoff steht.

Bei diesen Aminosilanen handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkoholabspaltung erhalten lassen.

Geeignete Ausgangsverbindungen zur Herstellung silanfunktionellen Alkylamide sind daher grundsätzlich beliebige Aminosilane der allgemeinen Formel (IX)

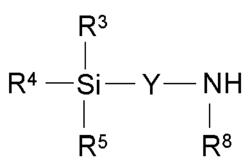

(IX),

in welcher $R^3$, $R^4$, $R^5$ und Y die für Formel (IX) genannte Bedeutung haben und $R^8$ für Wasserstoff steht.

Diese werden mit Alkylcarbonsäurealkylestern der allgemeinen Formel (XIII)

$$R^{11}—COOR^{12} \quad (XIII),$$

umgesetzt, in welcher

$R^{11}$ die oben genannte Bedeutung hat und
$R^{12}$ für einen gesättigten aliphatischen organischen Rest mit 1 bis 4 Kohlenstoffatomen steht.

Ganz besonders bevorzugte silanfunktionelle Alkylamide sind Umsetzungsprodukte von 3-Aminopropyltrimethoxysilan und/oder 3-Aminopropyltriethoxysilan mit Methylformiat und/oder Ethylformiat.

Geeignete Ausgangsverbindungen $C2_1$ zur Herstellung der der silanfunktionellen Polyisocyanate (C) sind auch Mercaptosilane der allgemeinen Formel (X)

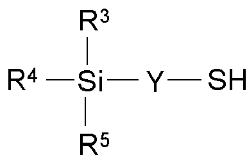

(X),

in welcher $R^3$, $R^4$, $R^5$ und Y die vorangehend für Formel (X) beschriebene Bedeutung haben.

Geeignete Mercaptosilane der allgemeinen Formel (X) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3 -Mercaptopropylmethyldimethoxysilan, 3-Mercaptopropyldimethylmethoxysilan, 3 -Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane sind solche der allgemeinen Formel (X), in welcher

$R^3$, $R^4$ und $R^5$ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und

Y für einen linearen oder verzweigten Alkylenrest mit 2 bis 10 Kohlenstoffatomen steht.

Besonders bevorzugte Mercaptosilane sind solche der allgemeinen Formel (X), in welcher

$R^3$, $R^4$ und $R^5$ jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste $R^3$, $R^4$ und $R^5$ für einen solchen Alkoxyrest steht, und
Y für einen Propylenrest ($-CH_2-CH_2-CH_2-$) steht.

Ganz besonders bevorzugte Mercaptosilane sind solche der allgemeinen Formel (X), in welcher

$R^3$, $R^4$ und $R^5$ für gleiche oder verschiedene Reste stehen und jeweils Methyl, Methoxy oder Ethoxy bedeuten, mit der Maßgabe, dass mindestens einer der Reste $R^3$, $R^4$ und $R^5$ für einen Methoxy- oder Ethoxyrest steht, und
Y für einen Propylenrest ($-CH_2-CH_2-CH_2-$) steht,

insbesondere 3-Mercaptopropyltrimethoxysilan und/oder 3-Mercaptopropyltriethoxysilan.

Zur Herstellung der silanfunktionellen Polyisocyanate (C) aus den Komponenten C1 und $C2_1$ werden die Ausgangspolyisocyanate C1 mit den silanfunktionellen Verbindungen $C2_1$ bei Temperaturen von 20 bis 200 °C, vorzugsweise 30 bis 160 °C, besonders bevorzugt bei 35 bis 120°C umgesetzt. Die Herstellung erfolgt bevorzugt unter Einhaltung eines Äquivalentverhältnisses von Isocyanatgruppen zu gegenüber Isocyanaten reaktiven Gruppen von 50 : 1 bis 1,05 : 1, vorzugsweise von 20 : 1 bis 1,25 : 1, besonders bevorzugt 10 : 1 bis 1,5 : 1.

Die Herstellung der silanfunktionellen Polyisocyanate (C) aus den Komponenten C1 und $C2_1$ kann lösemittelfrei

durchgeführt werden. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Umsetzung der Ausgangskomponenten C1 und $C2_1$ kann ohne den Einsatz von Katalysatoren durchgeführt werden. Insbesondere bei Einsatz von Mercaptosilanen (Komponente $C2_1$, Formel X) jedoch kann es von Vorteil sein, zur Beschleunigung der SH-NCO-Reaktion und Ausbildung der Thiourethan- bzw. Thioallophanatstrukturen, geeignete Katalysatoren mitzuverwenden. Geeignete Katalysatoren sind insbesondere die üblichen aus der Polyurethanchemie bekannten Katalysatoren, beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-ß-phenylethylamin, 1,4-Diazabicyclo-(2,2,2)-octan (DABCO) und Bis-(N,N-dimethylaminoethyl)adipat, Amidine, wie z. B. 1,5-Diazabi-cyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethyl-aminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wis-mut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat.

Bevorzugte einzusetzende Katalysatoren sind tertiäre Amine, Amidine und Zinnverbindungen der genannten Art.

Besonders bevorzugte Katalysatoren sind 1,4-Diazabicyclo-(2,2,2)-octan (DABCO), 1,5-Diazabi-cyclo[4.3.0]nonen (DBN), 1,8-Diazabicyclo(5.4.0)undecen-7 (DBU) sowie Dibutylzinn(IV)-dilaurat (DBTL).

Die beispielhaft genannten Katalysatoren können bei der Herstellung der Silangruppen enthaltenden Polyisocyanate einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der verwendeten Ausgangsverbindungen, zum Einsatz.

Detaillierte Syntheserouten zur Synthese von silanfunktionellen Polyisocyanaten (C) auf Basis der Umsetzung von Mercaptosilanen gemäß Formel X ($C2_1$) mit Polyisocyanaten gemäß Komponente C1 unter Bildung von Thiourethanstrukturen, bzw. Thioallophanatstrukturen sind in der EP-B 2892905 bzw. der WO15/189164 beschrieben, auf die an dieser Stelle verwiesen wird.

Detaillierte Syntheserouten zur Synthese von silanfunktionellen Polyisocyanaten (C) auf Basis der Umsetzung von Aminosilanen gemäß Formel IX ($C2_1$) mit Polyisocyanaten gemäß Komponente C1 sind in der WO16/146474 beschrieben, auf die an dieser Stelle verwiesen wird.

In einer bevorzugten Ausführungsform weist das mindestens eine silanfunktionelle Polyisocyanat (C) Thioallophanatstrukturen auf.

In einer besonders bevorzugten Ausführungsform weist das mindestens eine silanfunktionelle

Polyisocyanat (C) Thioallophanatstrukturen auf, die auf der Umsetzung von monomerem aliphatischem Diisocyanat mit einem Mercaptosilan der Formel X basieren.

In einer ganz besonders bevorzugten Ausführungsform ist das monomere aliphatische Diisocyanat PDI und/oder HDI. In einer alternativen ganz besonders bevorzugten Ausführungsform ist das Mercaptosilan Mercaptopropyltrimethoxysilan. Am meisten bevorzugt werden als monomeres Diisocyanat HDI und als Mercaptosilan Mercaptopropyltrimethoxysilan eingesetzt.

Aus der Reaktion von Aminosilanen mit cyclischen Carbonaten bzw. Lactonen erhältliche, Silangruppen aufweisenden Hydroxyurethane und Hydroxyamide ($C2_2$)

Erfindungsgemäß zu verwendende silanfunktionelle Polyisocyanate (C) sind auch erhältlich durch Umsetzung

(C1) mindestens eines Polyisocyanats mit

($C2_2$) mindestens einem -aus der Reaktion von Aminosilanen mit cyclischen Carbonaten bzw. Lactonen erhältlichen-Silangruppen aufweisenden Hydroxyurethan und/oder Hydroxyamid.

Bei dieser Umsetzung entstehen silanfunktionelle Allophantpolyisocyanate.

Hydroxyurethane und Hydroxyamide gemäß $C2_2$ sind durch Umsetzung von Aminosilanen mit cyclischen Carbonaten bzw. Lactonen unter Ringöffnung erhältlich.

Geeignete Aminosilane zur Herstellung der Komponente $C2_2$ sind beispielsweise Aminosilane der Formel (IX), die bereits vorangehend bei der Beschreibung der Verbindungen $C2_1$ detailiert beschrieben wurden. Die dortigen Ausführungen gelten für die zur Herstellung der Komponente $C2_2$ geeigneten Aminosilane analog. Es wird an dieser Stelle auf diese Ausführungen verwiesen.

Geeignete cyclische Carbonate sind insbesondere solche mit 3 oder 4 Kohlenstoffatomen im Ring, die gegebenenfalls auch substituiert sein können, wie z. B. 1,3-Dioxolan-2-on (Ethylencarbonat, EC), 4-Chlor-1,3-dioxolan-2-on, 4,5-Dichlor-1,3-dioxolan-2-on, 4-Methyl-1,3-dioxolan-2-on (Propylencarbonat, PC), 4-Ethyl-1,3-dioxolan-2-on, 4,5-Dimethyl-1,3-dioxolan-2-on, 4,4-Dimethyl-1,3-dioxolan-2-on, 4-Hydroxymethyl-1,3-dioxolan-2-on (Glycerincarbonat), 4-Phenoxymethyl-1,3-dioxolan-2-on, 1,3-Dioxan-2-on (Trimethylencarbonat), 5,5-Dimethyl-1,3-dioxan-2-on, 5-Methyl-5-propyl-1,3-dioxan-2-on, 5-Ethyl-5-(hydroxymethyl)-1,3-dioxan-2-on (TMP-Carbonat), 4-Isopropyl-5,5-dimethyl-1,3-dioxan-2-on (2,2,4-Trimethyl-pentan-1,3-diolcarbonat), 4-tert-Butyl-5-methyl-1,3-dioxan-2-on (2,4,4-Trimethyl-pentan-1,3-diolcarbonat), 2,4-Dioxaspiro[5.5]undecan-3-on (Cyclohexan-1,1-dimethanolspirocarbonat) oder beliebige Gemische solcher cyclischen Carbonate. Bevorzugte cyclische Carbonate sind Ethylencarbonat und/oder Propylencarbonat.

Geeignete Lactone sind beispielsweise solche mit 3 bis 6 Kohlenstoffatomen im Ring, die gegebenenfalls auch substituiert sein können, wie z. B. β-Propiolacton, β-Butyrolacton, γ-Butyrolacton, α-Methyl-γ-Butyrolacton, γ-Valerolacton, γ-Phenyl-γ-butyrolacton, α,α-Diphenyl-γ-butyrolacton, γ-Hexalacton (γ-Caprolacton), γ-Heptalacton, γ-Octalacton, γ-Nonalacton, γ-Decalacton, γ-Undecalacton, γ-Dodecalacton, γ-Methyl-γ-decanolacton, α-Acetyl-γ-butyrolacton, δ-Valerolacton, δ-Hexanolacton, δ-Octanolacton, δ-Nonanolacton, δ-Decalacton, δ-Undecalacton, δ-Tridecalacton, δ-Tetradecalacton, γ-Ethyl-γ-butyl-δ-valerolacton, Octahydrocoumarin, ε-Caprolacton, γ-Phenyl-ε-Caprolacton, ε-Decalacton oder beliebige Gemische solcher Lactone. Bevorzugte Lactone sind β-Propiolacton, γ-Butyrolacton, γ-Valerolacton, γ-Caprolacton und/oder ε-Caprolacton.

Die Herstellung der Ausgangsverbindungen $C2_2$ durch Umsetzung der genannten Aminosilane mit den cyclischen Carbonaten oder Lactonen ist an sich bekannt und kann beispielsweise nach den in SU-A 295764, US-A 4 104 296, EP-A 0 833 830 oder WO 1998/018844 beschriebenen Verfahren erfolgen. Im allgemeinen werden dabei die Reaktionspartner bei Temperaturen von 15 bis 100°C, vorzugsweise 20 bis 60°C in äquimolaren Mengen miteinander zur Reaktion gebracht. Es ist aber auch möglich, dass eine der Komponenten, beispielsweise das Aminosilan oder das cyclische Carbonat bzw. Lacton, in einer molar überschüssigen Menge eingesetzt wird, vorzugsweise jedoch in einem Überschuss von maximal 10 mol-%, besonders bevorzugt von maximal 5 mol-%. Die so erhältlichen hydroxyfunktionellen Ausgangsverbindungen $C2_2$, die bei Einsatz von cyclischen Carbonaten Urethangruppen, bei Einsatz von Lactonen Amidgruppen enthalten, stellen in der Regel farblose niedrigvikose Flüssigkeiten dar.

Zur Herstellung der silanfunktionellen Polyisocyanate (C) werden die Silangruppen aufweisenden Hydroxyurethane und/oder Hydroxyamide $C2_2$ mit den Polyisocyanaten C1 bei Temperaturen von 40 bis 200 °C, vorzugsweise 60 bis 180 °C, unter Einhaltung eines Äquivalent-Verhältnisses von Isocyanatgruppen zu gegenüber Isocyanaten reaktiven Gruppen von 4:1 bis 50:1, vorzugsweise von 5:1 bis 30:1, zu Allophanatpolyisocyanaten umgesetzt.

Dabei gelten als "gegenüber Isocyanaten reaktive Gruppen" neben den Hydroxylgruppen der Komponente $C2_2$ und den hieraus durch NCO/OH-Reaktion intermediär sich bildenden Urethangruppen im Falle der Verwendung von Hydroxyurethanen auch die hierin bereits enthaltenen Urethangruppen, da diese unter den Reaktionsbedingungen ebenfalls zu Allophanatgruppen weiterreagieren.

Die Herstellung der Silangruppen enthaltende Allophanatpolyisocyanate kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A 0 994 890 beschriebenen Art, um Alkylierungsmittel der in der US-A 3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z.B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen

sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung der Silangruppen enthaltenden Allophanatpolyisocyanate sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A 0 649 866 Seite 4, Zeile 7 bis Seite 5, Zeile 15 beschrieben.

Bevorzugte Katalysatoren sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen bei der Herstellung der Silangruppen enthaltenden Allophanatpolyisocyanate, falls überhaupt, in einer Menge von 0,001 bis 5 Gew.-%, vorzugsweise 0,005 bis 1 Gew.-%, bezogen auf das Gesamtgewicht der Reaktionspartner C1 und $C2_2$ zum Einsatz und können sowohl vor Reaktionsbeginn als auch zu jedem Zeitpunkt der Reaktion zugesetzt werden.

Die Herstellung der Silangruppen enthaltenden Allophanatpolyisocyanate erfolgt vorzugsweise lösemittelfrei. Gegebenenfalls können aber auch geeignete, gegenüber den reaktiven Gruppen der Ausgangskomponenten inerte Lösungsmittel mitverwendet werden. Geeignete Lösungsmittel sind beispielsweise die an sich bekannten üblichen Lacklösungsmittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösungsmittel.

Detaillierte Syntheserouten zur Synthese von silanfunktionellen Polyisocyanaten (C) auf Basis der Umsetzung von Hydroxyurethanen und/oder Hydroxyamiden ($C2_1$) mit Polyisocyanaten gemäß Komponente C1 unter Bildung von Allophanatstrukturen sind in der EP-A 2014692 beschrieben, auf die an dieser Stelle verwiesen wird.

Die aus der Umsetzung der Komponenten C1 mit den Komponenten $C2_1$ oder $C2_2$ erhältlichen silanfunktionellen Polyisocyanate (C) weisen bevorzugt einen NCO-Gehalt von 1,3 bis 24,9 Gew.-%, besonders bevorzugt von 4,0 bis 23,5 Gew.-%, ganz besonders bevorzugt von 5,0 bis 21,0 Gew.-%, und eine mittlere NCO-Funktionalität bevorzugt von 1,0 bis 4,9, besonders bevorzugt von 1,8 bis 4,8, ganz besonders bevorzugt von 2,0 bis 4,5 auf.

Bevorzugt enthalten die silanfunktionellen Polyisoycanate (C) keine Epoxygruppen.

Komponente D

Neben dem mindestens einen silanfunktionellen Polyisocyanat (Komponente C) kann die Beschichtungszusammensetzung Bp weitere, von C verschiedene, Polyisocyanate (Komponente D) enthalten.

Als Polyisocyanate (D) geeignet sind beliebige monomere Diisocyanate der mit aliphatisch, cycloaliphatisch, araliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können.

Geeignete monomere Diisocyanate sind beispielsweise solche der allgemeinen Formel (XIV)

$$OCN—V—NCO \quad (XIV),$$

in welcher V für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 5 bis 18 Kohlenstoffatomen steht, wie z. B. 1,4-Diisocyanatobutan, 1,5-Diisocyanatopentan (PDI), 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan ($H_{12}$-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Besonders bevorzugt sind monomere Diisocyanate der allgemeinen Formel (XIV), in welcher V für einen linearen oder verzweigten, aliphatischen oder cycloaliphatischen Rest mit 5 bis 13 Kohlenstoffatomen steht.

Ganz besonders bevorzugte monomere Diisocyanate sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Weitere geeignete Polyisocyanate (D) sind, neben den oben genannten monomeren Diisocyanaten, auch beliebige durch Modifizierung von monomeren aliphatischen, cycloaliphatischen, araliphatischen und/oder aromatischen Diisocyanaten erhältliche oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate. Die Herstellung dieser oligomeren Verbindungen erfolgt nach an sich bekannten Methoden zur Isocyanatoligomerisierung, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind. Als monomere Diisocyanate können beispielsweise die zuvor aufgelisteten Diisocyanate eingesetzt werden. Es gelten die dort genannten Vorzugsbereiche.

In einer bevorzugten Ausführungsform werden als Polyisocyanate oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate eingesetzt.

In einer besonders bevorzugten Ausführungsform werden als Polyisocyanate auf HDI oder PDI basierende, oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate eingesetzt.

In einer am meisten bevorzugten Ausführungsform werden als Polyisocyanate auf HDI oder PDI basierende, oligomere Di- und Polyisocyanate mit Isocyanuratstruktur eingesetzt.

Komponente E

Die Beschichtungszusammensetzung Bp enthält als Komponente E mindestens ein Pigment. Darunter fallen rein farbgebende anorganische und organische Pigmente, sowie Effektpigmente, Pigmente, die als Füllstoff dienen können, sowie Pigmente, die neben den oben genannten optischen Eigenschaften zusätzlich Korrosionsschutzeigenschaften (Korrosionschutzpigmente) aufweisen und/oder magnetisierend wirken. Beispielhaft seien genannt Titandioxid, Eisenoxide, Chromoxide, Russe, Azopigmente und Kupferphthalocyanin-Pigmente, Amthrachinon-Pigmente, Isoindoilibon-Pigmente, Siliciumdioxide, Magnesiumsilikathydrat, Kaolinglimmer, Calciumsilikat, Aluminiumoxid- u. -hydroxid, Bariumsulfat, Talkum, Calciumcarbonat, Kupferpigmente, Kupfer/Zink-Pigmente, Aluminiumpigmente, Zinkpigmente, wie z.B. Zinkphosphat, Zink-Aluminium-Orthophosphat, Zinkstaub, Zinkoxid, Zinkphosphosilikat, Zinkchromat und Zinktetraoxychromate, Barium- und Strontiumchromat, Strontiumphosphosilikate, Calciumphosphosilikate, Bariumphosphosilikate, Calciumborosilikat und Calciummetasilikat. Eine ausführliche Übersicht über Pigmente für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

Hilfs- und Zusatzstoffe F

Die Beschichtungszusammensetzung $B_P$ kann Hilfs- und Zusatzstoffe F enthalten.

- Zu den Hilfs- und Zusatzstoffen F gehören Katalysatoren, die die Reaktion zwischen den Isocyanatgruppen und den isocyanatreaktiven Gruppen der Komponenten beschleunigen. Dies sind zum Beispiel Titan-, Zirkonium-, Bismut-, Zinn- und/oder eisenhaltigen Katalysatoren, wie sie beispielsweise in WO 05058996 beschrieben sind. Möglich ist auch eine Zugabe von Aminen oder Amidinen.
- Außerdem können Katalysatoren zur Vernetzung von Silangruppen zugegeben werden. Bei diesen Katalysatoren handelt es sich um beliebige Verbindungen, die in der Lage sind, die Hydrolyse und Kondensation von Alkoxysilangruppen oder bevorzugt die thermisch induzierte Silankondensation zu beschleunigen. Geeignete Katalysatoren zur Vernetzung von Silangruppen sind beispielsweise Säuren, wie sie z. B. in der WO 2007/033786 beschrieben sind, Basen, wie sie z. B. in WO 2006/042658 beschrieben sind. Geeignete Katalysatoren zur Vernetzung von

Silangruppen sind auch Phosphorsäure- und Phosphonsäureester, die in mit Aminen, vorzugsweise mit tertiären Aminen blockierter Form vorliegen, und die im Temperaturbereich der Aushärtung von Automobildeck- und -klarlacken, beispielsweise im Bereich von 100 bis 150°C unter Abspaltung des Blockierungsamins die sauren Phosphorsäure- und Phosphonsäureester wieder freisetzen, wie beispielsweise in WO 2008/074489 und WO 2009/077180 beschrieben. Ebenfalls geeignete Katalysatoren zur Vernetzung von Silangruppen sind organische Sulfonsäuren, die in blockierter Form, beispielsweise in amin-neutralisierter Form oder als Addukt an Epoxiden, wie in der DE 2 356 768 B1 beschrieben, eingesetzt werden und oberhalb von 100°C die katalytisch aktiven Sulfonsäuren wieder freisetzen. Weitere zur Vernetzung von Silangruppen geeignete Katalysatoren sind auch Tetraalkylammoniumcarboxylate, sowie quaternäre Ammonium- und Phosphoniumpolyfluoride, wie sie z. B. aus der EP-A0 798 299, EP-A0 896 009 und EP-A0 962 455 als Trimerisierungskatalysatoren für Isocyanatgruppen bekannt sind, und Zink-Amidin-Komplexe, die nach dem Verfahren der WO 2014/016019 durch Umsetzung eines oder mehrerer Zink(II)biscarboxylate mit Amidinen hergestellt werden können.

- Beispiele weiterer geeigneter Hilfs- und Zusatzstoffe (F) sind Lackadditive, wie Lichtschutzmittel wie UV-Absorber und sterisch gehinderte Amine (HALS), organische Korrosionsschutzadditive, weiterhin Stabilisatoren, Entschäumungs-, Antikrater- und/oder Netzmittel, Verlaufsmittel, Dispergieradditive, filmbildende Hilfsmittel, Reaktivverdünner, Biozide, Entlüfter, Substanzen zur Rheologiesteuerung oder Füllstoffe, sofern es sich bei Letzteren nicht um Pigmente handelt (Diese fallen unter Komponente E).

  Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

  Als organische Korrosionsschutzadditive können beispielsweise 3-Aminopropyltriethoxysilan oder Benzothiazol-2-thiol eingesetzt werden.

  Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern.

  Netz- und Verlaufsmittel verbessern die Oberflächenbenetzung und/oder den Verlauf von Lacken.

  Dispergiermittel sind Additive, die das Dispergieren, also die optimale Durchmischung von eigentlich nicht mischbaren Phasen ermöglichen oder stabilisieren. Als Netz- und Dispergieradditive können beispielsweise hochmolekularen Block-Copolymere oder polyethermodifiziertes Siloxan eingesetzt werden, als Verlaufs- und Antikrateradditive beispeilsweise polyethermodifiziertes Polydimethylsiloxan oder grenzflächenaktive niedermolekulare Polymere.

  Rheologiesteuernde Additive sind wichtig um die Eigenschaften der Beschichtungszusammensetzung bei der Applikation und in der Verlaufsphase auf dem Substrat zu steuern und sind beispielsweise aus den Patentschriften WO 9422968, EP0276501, EP0249201 oder WO 9712945 bekannt.

  Als Reaktivverdünner können z.B. mono-, bi- oder polyfunktionelle Monomere oder Oligomere, Styrol, Epoxide und Acrylate eingesetzt werden.

  Als Wasserfänger können z.B. Zeolite (Alumosilikate), p-Toluolsulfonylisocyanat, Triethylorthoformiat, , Monooxazolidine oder Molekularsiebe, als Hydrolyseschutzmittel z.B. Carbodiimide und als Entlüfter z.B. schaumzerstörende Polymere und Polysiloxane, Mineralölbasis oder Phosphorsäureester eingesetzt werden.

  Eine ausführliche Übersicht über Lackadditive findet sich in dem "Lehrbuch der Lacke und Beschichtungen, Band III, Lösemittel, Weichmacher, Additive, Zwischenprodukte", H. Kittel, Verlag W.A. Colomb in der Heenemann GmbH, Berlin-Oberschwandorf, 1976, S. 237-398.

- Ebenfalls als Hilfs- und Zusatzstoffe F gelten Lösungsmittel. Das Lösungsmittel kann ein organisches Lösungsmittel oder ein Gemisch organischer Lösungsmittel sein oder Wasser oder ein Gemisch aus organischen(m) Lösungsmittel(n) und Wasser. Geeignete Lösungsmittel sind in dem Fachmann bekannter Art und Weise abgestimmt auf die Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele für organische Lösungsmittel sind aliphatische, cycloaliphatische und aromatische Kohlenwasserstoffe, Alkohole, Glycole, Glycolether, Ketone und Ester, wie z.B.: Solventnaphtha, Xylol, Methoxypropylacetat, Ethylacetat, Butylacetat, Dipropylenglykoldimethylether, Butoxypropanol, , Butylglykol, Butyldiglykol, Ethylenglykol, Diethylglycol, Butanon, Aceton, Ethanol, Propanol, n-Butanol, Isobutanol Methylethylketon oder Hexanon, sowie Gemische der genannten Lösemittel. Liegt der NCO-reaktive Teil der Zusammensetzung als wässrige Dispersion

vor, eignet sich auch Wasser als Löse- bzw. Verdünnungsmittel.

Vorzugsweise beträgt das Stoffmengen-Verhältnis der NCO-Gruppen der Komponente C und gegebenenfalls Komponente D (NCO-Gruppen aus C bzw. Summe aus C und D) zu den NH-Gruppen der Komponente A 2:1 bis 0,9:1, besonders bevorzugt 1:1 bis 1,3:1.

Vorzugsweise beträgt das Gewichtsverhältnis von Komponente C zu Komponente D 2:98 bis 1:0. In einer besonders bevorzugten Ausführungsform beträgt das Gewichtsverhältnis von Komponente C zu Komponente D 1:1.

Vorzugsweise beträgt der Anteil der Polyasparaginsaureester-haltigen Komponente A in der Beschichtungszusammensetzung Bp ≥ 10 bis ≤ 60 Gew.-%, besonders bevorzugt ≥ 15 bis ≤ 30 Gew.-%, ganz besonders bevorzugt ≥ 18 bis ≤ 25 Gew.-%, jeweils bezogen auf das Gesamtgewicht der Beschichtungszusammensetzung $B_P$.

Sofern weitere gegenüber Isocyanatgruppen reaktionsfähige Komponenten B in der Beschichtungszusammensetzung Bp enthalten sind, beträgt ihr Anteil bevorzugt bis zu 50 Gew.-% (≤ 50 Gew.-%), besonders bevorzugt ≥ 2 bis ≤ 30 Gew.-%, ganz besonders bevorzugt ≥ 5 bis ≤ 20 Gew.-%, jeweils bezogen auf das Gesamtgewicht der Beschichtungszusammensetzung $B_P$.

Vorzugsweise beträgt der Anteil der Pigmente E in der Beschichtungszusammensetzung $B_P$ ≥ 0,1 bis ≤ 50 Gew.-% , besonders bevorzugt ≥ 5 bis ≤ 40 Gew.-%, ganz besonders bevorzugt ≥ 10 bis ≤ 30 Gew.-%, jeweils bezogen auf das Gesamtgewicht der Beschichtungszusammensetzung $B_P$. Sofern Hilfs- und Zusatzstoffe F in der Beschichtungszusammensetzung Bp enthalten sind, beträgt ihr Anteil bevorzugt bis zu 50 Gew.-% (≤ 50 Gew.-%), besonders bevorzugt ≥ 5 bis ≤ 40 Gew.-%, ganz besonders bevorzugt ≥ 10 bis ≤ 30 Gew.-%, jeweils bezogen auf das Gesamtgewicht der Beschichtungszusammensetzung $B_P$.

Die erfindungsgemäßen Beschichtungszusammensetzung $B_P$ sind vorzugsweise keine aufschäumbaren oder schaumbildenden Zusammensetzungen. Die Zusammensetzungen sind vorzugsweise nicht radikalisch polymerisierbar, insbesondere nicht photo-polymerisierbar, d.h. die Zusammensetzungen härten nicht durch radikalische Prozesse aus, insbesondere nicht durch radikalische Polymerisationsprozesse die durch aktinische Strahlung initiiert werden.

Die Herstellung der erfindungsgemäßen Beschichtungszusammensetzung Bp erfolgt nach in der Technologie der Lacke an sich bekannten Methoden.

Eine isocyanatreaktive ($K_R$) und eine isocyanathaltige Komponente ($K_H$) werden zunächst getrennt durch Vermischen der jeweiligen isocyanatreaktiven Komponenten A und gegebenenfalls B, bzw. durch Vermischen der jeweiligen Polyisocyanatkomponenten C und gegebenenfalls D hergestellt. Die Pigmente E, sowie die Hilfs- und Zusatzstoffe F werden bevorzugt der isocyanatreaktiven Komponente ($K_R$) beigemischt. Ein Vermischen der so hergestellten Komponenten $K_R$ und $K_H$ erfolgt erst unmittelbar vor oder während der Applikation. Erfolgt das Vermischen vor der Applikation ist zu beachten, dass die Reaktion der Bestandteile nach dem Vermischen bereits startet. Je nach Auswahl der Komponenten und der Zusatzstoffe wird die Reaktion unterschiedlich schnell ablaufen. Die Verarbeitungszeit innerhalb derer die Zusammensetzung appliziert werden muss, auch als Topfzeit bezeichnet und definiert als die Zeit von der Vermischung der Komponenten bis zur Verdoppelung der Auslaufzeit, liegt dann je nach Auswahl der Komponenten im Bereich von 1 Minute bis zu 24 Stunden, meist im Bereich von 10 Minuten bis 8 Stunden. Die Bestimmung der Topfzeit erfolgt nach dem Fachmann bekannten Methoden.

In einer bevorzugten Ausführungsform werden die zur isocyanatreaktiven Komponente $K_R$ gehörenden Komponenten gemischt, gegebenenfalls einhergehend mit oder gefolgt von einer Dispergierung, und dann, gegebenenfalls gekühlt, angerieben. Letzteres kann z.B. unter Verwendung einer Perlmühle erfolgen. Der Anreibung kann ein Siebschritt folgen. Bevorzugt ruht die so erhaltene isocyanatreaktive Komponente ($K_R$) wenigstens 24 Stunden, bevor sie mit der isocyanathaltigen Komponente $K_H$ in Kontakt gebracht wird.

Das Mischen der zur isocyanatreaktiven Komponente $K_H$ gehörenden Komponenten kann einhergehend mit oder gefolgt von einer Dispergierung erfolgen.

Das Mischen der zur isocyanatreaktiven Komponente $K_R$ gehörenden Komponenten, bzw. der zur isocyanatreaktiven Komponente $K_H$ gehörenden Komponenten und das Mischen der Komponenten $K_R$ und $K_H$ kann beispielsweise mittels eines Rührwerk erfolgen.

<u>Beschichtungszusammensetzung für einen Klarlack ($B_K$)</u>

Unter einem Klarlack werden im Rahmend der vorliegenden Erfindung Lacke verstanden, die keine Pigmente enthalten.

<u>Polyasparaginsäureester-haltige Komponente G</u>

Bevorzugt enthalten Polyasparaginsäureester-haltige Komponenten G einen oder mehrere Polyasparaginsäureester der allgemeinen Formeln (IV) und gegebenenfalls (IV) bei denen $R^6$ und $R^7$ für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste stehen. Am meisten bevorzugt ist Ethyl.

Polyasparaginsäureester-haltige Komponenten G enthalten einen oder mehrere Polyasparaginsäureester der allgemeinen Formeln (IV) und gegebenenfalls (V), bei denen Z sich von Polyaminen der allgemeinen Formel (XV) ableitet:

$$Z\!-\!\left[NH_2\right]_p \qquad (XV),$$

wobei Z

für einen p-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann,

p für eine ganze Zahl > 1, bevorzugt für 2 steht.

Beispielhaft seien die folgenden Polyamine genannt: Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa DuPont), 1,6-Diaminohexan, 2,2,4- und/oder 2,4,4-Trimethyl-1,6-diaminohexan, 1,11-Diaminoundecan, 1,12-Diaminododecan oder Triaminononan, Etheramine, wie z.B. 4,9-dioxadodecane-1,12-diamine, 4,7,10-trioxatridecane-1,13 -diamine, oder höhermolekulare Polyetherpolyamine mit aliphatisch gebundenen, primären Aminogruppen, wie sie beispielsweise unter der Bezeichnung Jeffamin® von der Firma Huntsman vertrieben werden. Ebenfalls einsetzbar sind aliphatische polyzyklische Polyamine, wie Tricyclodecanbismethylamin (TCD-Diamin) oder Bis(aminomethyl)norbornane, amino-funktionelle Siloxane, z.B. Diaminopropylsiloxan G10 DAS (Fa. Momentive), Fettalkyl-basierte Amine, wie z.B. Fentamine der Fa. Solvay, Dimerfettsäurediamine wie z.B Priamine der Fa. Croda.

Bevorzugt enthalten Polyasparaginsäureester-haltige Komponenten G einen oder mehrere Polyasparaginsäureester der allgemeinen Formeln (IV) und gegebenenfalls (V) bei denen Z für organische Reste steht, die durch Entfernung der primären Aminogruppen aus einem der Polyamine der allgemeinen Formel (XV) erhalten wird, worin m = 2 bedeutet und Z für einen cyclischen Kohlenwasserstoffrest mit mindestens einem cyclischen Kohlenstoffring steht. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H6-TDA), Isopropyl-2,4-diaminocyclohexan, und/oder Isopropyl-2,6-diaminocyclohexan, 1,3-Bis-(aminomethyl)-cyclohexan, 2,4'-, und/oder 4,4'-Diamino-dicyclohexylmethan, 3,3'-Dimethyl-4,4'-diamino-dicyclohexylmethan (Laromin® C 260, Fa. BASF AG), die isomere, eine Methylgruppe als Kernsubstituenten aufweisende Diaminodicyclohexylmethane (=C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol oder m-Xylylendiamin.

Ebenfalls bevorzugt enthalten Polyasparaginsäureester-haltige Komponenten G einen oder mehrere Polyasparaginsäureester der allgemeinen Formeln (IV) und gegebenenfalls (V) bei denen Z für organische Reste steht, die durch Entfernung der primären Aminogruppen aus einem der Polyamine der allgemeinen Formel (XV) erhalten wird, ausgewählt aus der Gruppe: Polyetherpolyamine mit aliphatisch gebundenen primären Aminogruppen, 1,2 Diaminopropan, 1,4-Diaminobutan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 1,5-Diaminopentan, 2,4'- und/oder 4,4'-Diamino-dicyclohexylmethan oder 3,3'-Dimethyl-4,4'-diamino-dicyclohexylmethan. Besonders bevorzugt sind 3,3'-Dimethyl-4,4'-diamino-dicyclohexylmethan, 1,5-Diaminopentan, 2,4'- und/oder 4,4'-Diaminodicyclohexylmethan, 1,5-Diamino-2-methylpentan und ganz besonders bevorzugt ist die Verwendung von 2,4'- und/oder 4,4'-Diaminodicyclohexylmethan.

Besonders bevorzugt enthalten Polyasparaginsäureester-haltige Komponenten G einen oder mehrere Polyasparaginsäureester der allgemeinen Formeln (IV) und gegebenenfalls (V), bei denen Z für organische Reste steht, die durch Entfernung der primären Aminogruppen aus einem der Polyamine der allgemeinen Formel (XV) erhalten wird, ausgewählt aus der Gruppe: Polyetherpolyamine mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'diamino-dicyclohexylmethan.

Ganz besonders bevorzugt enthalten Polyasparaginsäureester-haltige Komponenten G einen oder mehrere Polyasparaginsäureester der allgemeinen Formeln (IV) und gegebenenfalls (V), bei denen Z für organische Reste steht,

die durch Entfernung der primären Aminogruppen aus einem der Polyamine der allgemeinen Formel (XV) erhalten wird, ausgewählt aus der Gruppe: 3,3'-Dimethyl-4,4'diaminodicyclohexylmethan, 2,4'- und/oder 4,4'-Diaminodicyclohexylmethan, 1,5-Diamino-2-methylpentan.

Sofern die Polyasparaginsäureester-haltige Komponente G einen oder mehrere Polyasparaginsäureester der allgemeinen Formel (V) enthält, so ist dieser/ sind diese mit einem Anteil von > 0%, bevorzugt mindestens 0,1% (≥ 0,1%), besonders bevorzugt mindestens 1% (≥ 1%), ganz besonders bevorzugt mindestens 4% (≥ 4%), und bevorzugt von maximal 20% (≤ 20%), besonders bevorzugt maximal 15% (≤ 15%) der GC Oberfläche (gemessen als Flächen-% im Gas Chromatogram) enthalten, wobei die Summe der GC Oberflächen der Verbindungen der beiden allgemeinen Formeln (IV) und (V) 100% beträgt. Die angegebenen Ober- und Untergrenzen sind beliebig kombinierbar. Es gelten alle möglichen Kombinationen als offenbart.

Sofern die Polyasparaginsäureester-haltige Komponente G Fumarsäuredialkylester (Komponente G3) enthält, so liegt dieser/liegen diese in Mengen von > 0% Gew.-%, bevorzugt ≥ 0,01 bis ≤ 3 Gew.-%, mehr bevorzugt ≥ 0,01 bis ≤ 1,5 Gew.-%, noch mehr bevorzugt ≥ 0,01 bis ≤ 1,3 Gew.-%, darüberhinaus bevorzugt ≥ 0,01 bis ≤ 1 Gew.-%, am meisten bevorzugt ≥ 0,01 bis <0,1 Gew.-%, bezogen auf das Gesamtgewicht der Komponente G, vor. Bezüglich der Bildung von Fumarsäuredialkylestern wird an dieser Stelle auf die entsprechenden Ausführungen bei der Beschreibung der Komponente A ("Einschub") verwiesen.

Bevorzugt enthalten Polyasparaginsäureester-haltige Komponenten G einen oder mehrere Polyasparaginsäureester der allgemeinen Formel (IV) und gegebenenfalls Formel (V), wobei die Ester eine Platin-Cobalt-Farbzahl ≤ 200, besonders bevorzugt ≤ 100 aufweisen. Die Messung der Platin-Cobalt-Farbzahl erfolgt gemäß DIN EN ISO 6271:2016-05.

Die erfindungsgemäß zu verwendenden Polyasparaginsäureester-haltigen Komponenten G können durch das folgende Verfahren hergestellt werden:

Umsetzung von Polyaminen der allgemeinen Formel (XV),

$$Z\left[NH_2\right]_p \qquad (XV),$$

wobei Z

für einen p-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann,
p für eine ganze Zahl > 1, bevorzugt für 2 steht,

mit Verbindungen der allgemeinen Formel (XVI)

$$R^6OOC-CH=CH-COOR^7 \qquad (XVI),$$

wobei $R^6$ und $R^7$
für gleiche oder verschiedene organische Reste, vorzugsweise für gleiche oder verschiedene Alkylreste mit je 1 bis 18 Kohlenstoffatomen, besonders bevorzugt für gleiche oder verschiedene Alkylreste mit je 1 bis 8 Kohlenstoffatomen, ganz besonders bevorzugt für jeweils Alkylreste wie Methyl-, Ethyl-, Propyl-, iso-Propyl-, Butyl- oder iso-Butyl-Reste und am meisten bevorzugt für Ethyl stehen,

und einer destillativen Entfernung des nicht umgesetzten Anteils an der Verbindung der allgemeinen Formel (XVI).

Vorzugsweise erfolgt das oben beschriebene Verfahren zur Herstellung der Polyasparaginsäureester-haltigen Komponenten G in zwei Schritten. Im ersten Schritt werden die Verbindungen der allgemeinen Formel (XV) und (XVI) bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (XV) zu den C=C-Doppelbindungsäquivalenten der Verbindungen der allgemeinen Formel (XVI) von 1:1.2 bis 1.2:1, vorzugsweise jedoch 1:1.05 bis 1.05:1, besonders bevorzugt 1:1, bis zu einem Restgehalt an Verbindungen der allgemeinen Formel (XVI)

von 2 bis 15 Gew.-Prozent, bevorzugt von 3 bis 10 Gew.-Prozent umgesetzt.

Im zweiten Schritt wird der nicht umgesetzte Anteil an der Verbindungen der allgemeinen Formel (XVI) destillativ entfernt.

Polyasparaginsäureester-haltige Komponenten G, die nur Polyasparaginsäureester der allgemeinen Formel (IV) enthalten, nicht jedoch der Formel (V), bzw. die nahezu frei sind von Polyasparaginsäureestern der allgemeinen Formel (V), lassen sich analog herstellen, wobei jedoch mit einem Überschuss an Verbindungen der allgemeinen Formel (XVI) gearbeitet wird, d.h. in einem Verhältnis der Äquivalente der primären Aminogruppen der Verbindungen der allgemeinen Formel (XV) zu den C=C-Doppelbindungsäquivalenten der Verbindungen der allgemeinen Formel (XVI) von 1:10, bevorzugt 1:5, besonders bevorzugt 1:2.

Bezüglich der Destillationsbedingungen gilt das zur Herstellung Polyasparaginsaureester-haltiger Komponenten A Ausgeführte hier analog.

Bezüglich Beispielen und Vorzugsbereichen der Polyamine der allgemeinen Formel (XV), die in dem oben beschriebenen Verfahren eingesetzt werden können, verweisen wir auf die vorangegangenen Ausführungen.

Bevorzugte Verbindungen der allgemeinen Formel (XVI), die in dem oben beschriebenen Verfahren Anwendung finden sind Malein- oder Fumarsäureester der allgemeinen Formel (XVI), worin $R^6$ und $R^7$ für gleiche oder verschiedene organische Reste mit je 1 bis 18 Kohlenstoffatomen stehen. Bevorzugt stehen $R^6$ und $R^7$ unabhängig voneinander für lineare oder verzweigte Alkylreste mit 1 bis 8 Kohlenstoffatomen, besonders bevorzugt für jeweils Alkylreste wie Methyl-, Ethyl-, Propyl-, iso-Propyl-, Butyl- oder iso-Butyl-Reste und ganz besonders bevorzugt für Ethyl.

Beispielhaft für Verbindungen der allgemeinen Formel (XVI) seien die folgenden Verbindungen genannt: Maleinsäuredimethylester, -diethylester, -di-n oder -iso-propylester, -di-n-butylester, -di-2-ethyl-hexylester oder die entsprechenden Fumarsäureester. Ganz besonders bevorzugt ist Maleinsäurediethylester.

<u>Komponenten H</u>

Neben der mindestens einen Polyasparaginsäureester-haltigen Komponente G kann die Beschichtungszusammensetzung $B_K$ weitere gegenüber Isocyanatgruppen reaktionsfähige Komponenten (H) enthalten.

Dies können beispielsweise niedermolekulare Polyole des Molekulargewichtsbereichs von 62 bis 300 g/mol, beispielsweise Ethylenglykol, Propylenglykol, Trimethylolpropan, Glycerin oder Gemische dieser Alkohole, oder Polyhydroxyverbindungen eines über 300 g/mol, bevorzugt über 400 g/mol, besonders bevorzugt eines zwischen 400 und 20000 g/mol liegenden Molekulargewichts sein. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Polyurethan-, Carbonat- und Polyacrylatpoloyolen und Gemischen aus derartigen Polyolen ausgewählt sind. Bevorzugt sind Polyhydroxylverbindungen der oben genannten Art.

<u>Komponenten I</u>

Die Beschichtungszusammensetzung $B_K$ enthält als Komponente I mindestens ein Polyisocyanat. Als Polyisocyanate (I) geeignet sind beliebige monomere Diisocyanate der mit aliphatisch, cycloaliphatisch, araliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können.

Geeignete monomere Diisocyanate sind beispielsweise solche der allgemeinen Formel (XVII)

$$OCN—W—NCO \quad (XVII),$$

in welcher W für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 5 bis 18 Kohlenstoffatomen steht, wie z. B. 1,4-Diisocyanatobutan, 1,5-Diisocyanatopentan (PDI), 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3-und 1,4-Diisocyanatocyclohexan, 1,4-Diisocyanato-3,3,5-trimethylcyclohexan, 1,3-Diisocyanato-2-methylcyclohexan, 1,3 -Diisocyanato-4-methylcyclohexan, 1-Isocyanato-3,3,5 -trimethyl-5 - isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan ($H_{12}$-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat,

1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Besonders bevorzugt sind monomere Diisocyanate der allgemeinen Formel (XVII), in welcher W für einen linearen oder verzweigten, aliphatischen oder cycloaliphatischen Rest mit 5 bis 13 Kohlenstoffatomen steht.

Ganz besonders bevorzugte monomere Diisocyanate sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Weitere geeignete Polyisocyanate (I) sind, neben den oben genannten monomeren Diisocyanaten, auch beliebige durch Modifizierung von monomeren aliphatischen, cycloaliphatischen, araliphatischen und/oder aromatischen Diisocyanaten erhältliche oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate. Die Herstellung dieser oligomeren Verbindungen erfolgt nach an sich bekannten Methoden zur Isocyanatoligomerisierung, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 sowie in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 und JP 56059828 beispielhaft beschrieben sind. Als monomere Diisocyanate können beispielsweise die zuvor aufgelisteten Diisocyanate eingesetzt werden. Es gelten die dort genannten Vorzugsbereiche.

In einer bevorzugten Ausführungsform werden als Polyisocyanate oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate eingesetzt.

In einer besonders bevorzugten Ausführungsform werden als Polyisocyanate auf HDI oder PDI basierende, oligomere Di- und Polyisocyanate mit Uretdion-, Isocyanurat-, Urethan-, Allophanat-, Thiourethan-, Thioallophanat-, Biuret-, Harnstoff-, Iminooxadiazindion- und/oder Oxadiazintrionstruktur oder beliebige Gemische dieser oligomeren Di- und Polyisocyanate eingesetzt.

In einer am meisten bevorzugten Ausführungsform werden als Polyisocyanate auf HDI oder PDI basierende, oligomere Di- und Polyisocyanate mit Isocyanuratstruktur eingesetzt.

Hilfs- und Zusatzstoffe J

Die Beschichtungszusammensetzung $B_K$ kann Hilfs- und Zusatzstoffe J enthalten.

- Zu den Hilfs- und Zusatzstoffen J gehören Katalysatoren, die die Reaktion zwischen den Isocyanatgruppen und den isocyanatreaktiven Gruppen der Komponenten beschleunigen. Dies sind zum Beispiel Titan-, Zirkonium-, Bismut-, Zinn- und/oder eisenhaltigen Katalysatoren, wie sie beispielsweise in WO 05058996 beschrieben sind. Möglich ist auch eine Zugabe von Aminen oder Amidinen.
- Beispiele weiterer geeigneter Hilfs- und Zusatzstoffe (J) sind Lackadditive, wie Lichtschutzmittel wie UV-Absorber und sterisch gehinderte Amine (HALS), organische Korrosionsschutzadditive, weiterhin Stabilisatoren, Entschäumungs-, Antikrater- und/oder Netzmittel, Verlaufsmittel, Dispergieradditive, filmbildende Hilfsmittel, Reaktivverdünner, Biozide, Entlüfter, Substanzen zur Rheologiesteuerung oder Füllstoffe, sofern es sich bei Letzteren nicht um Pigmente handelt. Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

  Als organsiche Korrosionsschutzadditive können beispielsweise 3-Aminopropyltriethoxysilan oder Benzothiazol-2-thio eingesetzt werden.

  Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern.

  Netz- und Verlaufsmittel verbessern die Oberflächenbenetzung und/oder den Verlauf von Lacken.

  Dispergiermittel sind Additive, die das Dispergieren, also die optimale Durchmischung von eigentlich nicht mischbaren Phasen ermöglichen oder stabilisieren. Als Netz- und Dispergieradditive können beispielsweise hochmolekularen Block-Copolymere oder polyethermodifiziertes Siloxan eingesetzt werden, als Verlaufs- und Antikrateradditive beispeilsweise polyethermodifiziertes Polydimethylsiloxan oder grenzflächenaktive niedermolekulare Polymere.
Rheologiesteuernde Additive sind wichtig um die Eigenschaften der Beschichtungszusammensetzung bei der Applikation und in der Verlaufsphase auf dem Substrat zu steuern und sind beispielsweise aus den Patentschriften WO 9422968, EP0276501, EP0249201 oder WO 9712945 bekannt.
Als Reaktivverdünner können z.B. mono-, bi- oder polyfunktionelle Monomere oder Oligomere, Styrol, Epoxide und Acrylate eingesetzt werden.
Als Wasserfänger können z.B. Zeolite (Alumosilikate), p-Toluolsulfonylisocyanat, Triethylorthoformiat, , Monooxazolidine oder Molekularsiebe, als Hydrolyseschutzmittel z.B. Carbodiimide und als Entlüfter z.B. schaumzerstörende Polymere und Polysiloxane, Mineralölbasis oder Phosphorsäureester eingesetzt werden.
Eine ausführliche Übersicht über Lackadditive findet sich in dem "Lehrbuch der Lacke und Beschichtungen, Band III, Lösemittel, Weichmacher, Additive, Zwischenprodukte", H. Kittel,
Verlag W.A. Colomb in der Heenemann GmbH, Berlin-Oberschwandorf, 1976, S. 237-398.

- Ebenfalls als Hilfs- und Zusatzstoffe J gelten Lösungsmittel. Das Lösungsmittel kann ein organisches Lösungsmittel oder ein Gemisch organischer Lösungsmittel sein oder Wasser oder ein Gemisch aus organischen(m) Lösungsmittel(n) und Wasser. Geeignete Lösungsmittel sind in dem Fachmann bekannter Art und Weise abgestimmt auf die Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele für organische Lösungsmittel sind aliphatische, cycloaliphatische und aromatische Kohlenwasserstoffe, Alkohole, Glycole, Glycolether, Ketone und Ester, wie z.B.: Solventnaphtha, Xylol, Methoxypropylacetat, Ethylacetat, Butylacetat, Dipropylenglykoldimethylether, Butoxypropanol, , Butylglykol, Butyldiglykol, Ethylenglykol, Diethylglycol, Butanon, Aceton, Ethanol, Propanol, n-Butanol, Isobutanol Methylethylketon oder Hexanon, sowie Gemische der genannten Lösemittel. Liegt der NCO-reaktive Teil der Zusammensetzung als wässrige Dispersion vor, eignet sich auch Wasser als Löse- bzw. Verdünnungsmittel.

Vorzugsweise beträgt das Stoffmengen-Verhältnis der NCO-Gruppen der Komponente I zu den NH-Gruppen der Komponente G 2:1 bis 0,9:1, besonders bevorzugt 1:1 bis 1,3:1.

Vorzugsweise beträgt der Anteil der Polyasparaginsaureester-haltigen Komponente G in der Beschichtungszusammensetzung $B_K \geq 10$ bis $\leq 80$ Gew.-% , besonders bevorzugt $\geq 20$ bis $\leq 60$ Gew.-%, ganz besonders bevorzugt $\geq 30$ bis $\leq 50$ Gew.-%, jeweils bezogen auf das Gesamtgewicht der Beschichtungszusammensetzung $B_K$.

Sofern weitere gegenüber Isocyanatgruppen reaktionsfähige Komponenten H in der Beschichtungszusammensetzung $B_K$ enthalten sind, beträgt ihr Anteil bevorzugt bis zu 50 Gew.-% ($\leq 50$ Gew.-%), besonders bevorzugt $\geq 5$ bis $\leq 40$ Gew.-%, ganz besonders bevorzugt $\geq 10$ bis $\leq 30$ Gew.-%, jeweils bezogen auf das Gesamtgewicht der Beschichtungszusammensetzung $B_K$.

Sofern Hilfs- und Zusatzstoffe J in der Beschichtungszusammensetzung $B_K$ enthalten sind, beträgt ihr Anteil bevorzugt bis zu 50 Gew.-% ($\leq 50$ Gew.-%), besonders bevorzugt $\geq 5$ bis $\leq 40$ Gew.-%, ganz besonders bevorzugt $\geq 2$ bis $\leq 30$ Gew.-%, jeweils bezogen auf das Gesamtgewicht der Beschichtungszusammensetzung $B_K$.

Die erfindungsgemäßen Beschichtungszusammensetzung $B_K$ sind vorzugsweise keine aufschäumbaren oder schaumbildenden Zusammensetzungen. Die Zusammensetzungen sind vorzugsweise nicht radikalisch polymerisierbar, insbesondere nicht photo-polymerisierbar, d.h. die Zusammensetzungen härten nicht durch radikalische Prozesse aus, insbesondere nicht durch radikalische Polymerisationsprozesse die durch aktinische Strahlung initiiert werden.

Die Herstellung der erfindungsgemäßen Beschichtungszusammensetzung $B_K$ erfolgt nach in der Technologie der Lacke an sich bekannten Methoden.

Eine isocyanatreaktive ($K_{R'}$) und eine isocyanathaltige Komponente ($K_{H'}$) werden zunächst getrennt durch Vermischen der jeweiligen isocyanatreaktiven Komponenten G und gegebenenfalls H, bzw. durch Vermischen der jeweiligen Polyisocyanatkomponenten I hergestellt. Die Hilfs- und Zusatzstoffe J werden bevorzugt der isocyanatreaktiven Komponente ($K_{R'}$) beigemischt. Ein Vermischen der so hergestellten Komponenten $K_{R'}$ und $K_{H'}$ erfolgt erst unmittelbar vor oder während der Applikation. Erfolgt das Vermischen vor der Applikation ist zu beachten, dass die Reaktion der Bestandteile nach dem Vermischen bereits startet. Je nach Auswahl der Komponenten und der Zusatzstoffe wird die Reaktion unterschiedlich schnell ablaufen. Die Verarbeitungszeit innerhalb derer die Zusammensetzung appliziert werden muss, auch als Topfzeit bezeichnet und definiert als die Zeit von der Vermischung der Komponenten bis zur Verdoppelung der Auslaufzeit, liegt dann je nach Auswahl der Komponenten im Bereich von 1 Minute bis zu 24 Stunden, meist im Bereich von 10 Minuten bis 8 Stunden. Die Bestimmung der Topfzeit erfolgt nach dem Fachmann bekannten Methoden.

Das Mischen der zur isocyanatreaktiven Komponente $K_{R'}$ gehörenden Komponenten, ebenso wie das Mischen

der zur isocyanatreaktiven Komponente $K_{H'}$ gehörenden Komponenten kann einhergehend mit oder gefolgt von einer Dispergierung erfolgen.

Das Mischen der zur isocyanatreaktiven Komponente $K_{R'}$ gehörenden Komponenten, bzw. der zur isocyanatreaktiven Komponente $K_{H'}$ gehörenden Komponenten und das Mischen der Komponenten $K_{R'}$ und $K_{H'}$ kann beispielsweise mittels eines Rührwerks erfolgen.

Die Erfindung betrifft auch ein auch ein Schichtsystem, umfassend ein Substrat, mindestens eine auf mindestens einen Teil des Substrats aufgetragene, teilweise gehärtete oder vollständig gehärtete Beschichtungszusammensetzung für einen pigmentierten Lack ($B_P$) gemäß vorstehender Beschreibung und mindestens eine darauf applizierte Beschichtungszusammensetzung für einen Klarlack ($B_K$) gemäß vorstehender Beschreibung.

Die Erfindung betrifft weiterhin ein Verfahren zum Herstellen eines Schichtaufbaus auf einem Substrat, welches mindestens folgende Schritte umfasst:

i) Auftragen mindestens einer vorstehend beschriebenen Beschichtungszusammensetzung für einen pigmentierten Lack ($B_P$) auf mindestens einen Teil eines zu beschichtenden Substrats,

ii) Auftragen mindestens einer vorstehend beschriebenen Beschichtungszusammensetzung für einen Klarlack ($B_K$) auf mindestens einen Teil der sich auf dem Substrat befindenden Schicht bzw. des sich auf dem Substrat befindenden Schichtaufbaus aus i), und

iii) vollständiges Härten des sich auf dem Substrat befindenden Schichtaufbaus aus ii).

Gegenstand der Erfindung ist auch ein Schichtaufbau auf einem Substrat, erhältlich nach dem oben beschriebenen Verfahren.

Die Beschichtungszusammensetzungen können durch herkömmliche Auftragungsverfahren aufgetragen werden. Beispiele für Auftragsverfahren sind Bürsten, Walzenauftrag, Rakeln, Tauchen und Sprühen, bevorzugt ist ein Sprühauftrag.

Die Aushärtung des Schichtaufbaus kann in einem Schritt, d.h. nach Auftragen der obersten aufzutragenden Schicht des Klarlacks erfolgen.

Es ist aber auch möglich bereits zuvor, nach jedem beliebigen Auftragungsschritt einer Schicht einen Härtungsschritt durchzuführen, der zu einer nicht vollständigen oder einer vollständigen Härtung der sich bereits auf dem Substrat befindenden Schichten führt.

Dem Härtungsschritt bzw. den Härtungsschritten kann ein Ablüftungsschritt vorausgehen. Die Härtung erfolgt nach den in der Beschichtungstechnologie üblichen Methoden entweder unter Umgebungsbedingungen bezüglich Temperatur und Luftfeuchte oder unter forcierten Bedingungen beispielsweise durch Temperaturerhöhung in Öfen, Einsatz von Strahlung wie beispielsweise Infrarot- oder Nahinfrarot- oder Mikrowellenstrahlung, sowie Einsatz von entfeuchteter und/oder erwärmter Luft oder anderen Gasen. Bevorzugt ist dabei, auf den Einsatz von Geräten zur forcierten Aushärtung zu verzichten. Die Härtungstemperaturen betragen von -20 bis 100°C, vorzugsweise von -10 bis 80°C, bevorzugter von 0 bis 60°C und am meisten bevorzugt von 10 bis 40°C. Auch wenn nicht bevorzugt, geringere Härtungstemperaturen können ebenfalls verwendet werden, werden jedoch zu längeren Härtungszeiten führen. Es ist ebenfalls möglich, auch wenn nicht bevorzugt, die Zusammensetzung bei höheren Temperaturen, beispielsweise 80 bis 160°C oder höher, auszuhärten.

Unter den Begriffen "vollständig gehärtet" oder "ausgehärtet" ist erfindungsgemäß zu verstehen, dass alle in den Beschichtungsmitteln vorhandenen vernetzungsfähigen Gruppen, d.h. NCO-Gruppen und NCO-reaktive Gruppen, vollständig vernetzt, d.h. abreagiert sind. Dabei kann die Vernetzung allein zwischen den im Beschichtungsmittel vorhandenen NCO-Gruppen und NCO-reaktiven Gruppen erfolgen, es kann zudem aber z.B. auch zu einer Vernetzungsreaktion von NCO-Gruppen mit Luftfeuchtigkeit aus der Umgebung unter Bildung von Harnstoffgruppe erfolgen.

Unter den Begriffen "teilweise gehärtet" oder "nicht vollständig gehärtet" ist entsprechend eine nicht vollständige Vernetzung der vorhandenen vernetzungsfähigen Gruppen zu verstehen.

Als Substrate eignen sich insbesondere metallische Substrate, wie z.B. Stahl, eisen- oder alkalisphosphatierter Stahl, Zink und Aluminium.

Die erfindungsgemäßen Schichtsysteme finden Anwendung bei der Beschichtung z.B. von kommunalen Nutzfahrzeugen, Traktoren, Baggern, Mähdreschern, Kränen, Gabelstaplern, Lastwagen, Bussen, Zügen, Waggons, LKW-Anhängern, Fahrzeugkränen, von Fahrzeuganbauteilen (z.B. Felgen, Scheibenwischern, Zierleisten), metallischen Industriegütern, Flugzeugen, Arbeitsmaschinen (z.B. Gebläsen, Pumpen, Verdichtern, Schleppern, Erntemaschinen) oder Werkzeugmaschinen, (z.B. Dreh-, Fräs-, Bohr-, Hobel- und Schleifmaschinen).

## Experimenteller Teil

Alle Prozentangaben beziehen sich, soweit nichts Anderslautendes vermerkt, auf das Gewicht.

Eingesetzte Produkte:

- Desmophen® NH 1423 LF (Polyaspartikpolyol), Covestro Deutschland AG, Leverkusen, DE
- SYLOSIV® A4 (Wasserfänger), W. R. Grace & Co., Columbia, Maryland USA.
- Methoxypropylacetat, Carl Roth GmbH + Co KG, Karlsruhe, DE
- Butlyacetat, , Carl Roth GmbH + Co KG, Karlsruhe, DE
- BYK® A 530 (Entschäumer), BYK-Chemie GmbH, Wesel, DE
- Disperbyk® 163 (Dispergieraddtiv), BYK-Chemie GmbH, Wesel, DE
- BYK® 331 (Verlaufadditiv), BYK-Chemie GmbH, Wesel, DE
- Heucophos® ZPA (Korrosionschutzpigment), Heubach GmbH, Langelsheim, DE
- Heucophos® ZPO (Korrosionschutzpigment), Heubach GmbH, Langelsheim, DE
- Schwerspat EWO (Bariumsulfat - Füllstoff), Sachtleben Minerals GmbH & Co. KG, Hausach, DE
- Luzenac® 20M2 (Talkum-Füllstoff), Imerys Minerals GmbH, Rheinberg, DE
- Tronox® RKB-4 (Titandioxid-Pigment), Tronox, Stamford, USA
- Bayferrox® 420 (Eisenoxid gelb - Pigment), Lanxess, Köln, DE
- Asconium® 142 DA (Korrosionschutzinhibitor), Ascotec, Saint-Etienne, FR
- Tinuvin® 292 (HALS Lichtschutzmittel), BASF AG, Ludwigshafen, DE
- Tinuvin® 384-2 (UV-Lichtschutzmittel), BASF AG, Ludwigshafen, DE
- Additive OF (Wasserfänger), Borchers GmbH, Langenfeld, DE
- Desmodur® ultra N 3600 (Polyisocyanat), Covestro Deutschland AG, Leverkusen, DE
- Desmodur® 2873 (silanmodifiziertes Polyisocyanat), Covestro Deutschland AG, Leverkusen, DE

Beispiele 1 und 2: Herstellung der Primer 1a/1b und 2a/2b

(Tabelle 1)

| | Primerrezeptur gelb | | |
|---|---|---|---|
| | Beispiel | 1a/1b | 2a/2b |
| | **Komponente I** | | |
| 1 | Desmophen® NH 1423 LF (Polyaspartik, Polyol) | 27 | 23 |
| 2 | SYLOSIV® A4 (Wasserfänger) | 3 | 2,9 |
| 3 | Methoxypropylacetat: Butylacetat (1:1) (Lösemittel) | 7,4 | 6 |
| 4 | BYK® A 530 (Entschäumer) | 0,4 | 0,4 |

(fortgesetzt)

| | Primerrezeptur gelb | | |
|---|---|---|---|
| | Beispiel | 1a/1b | 2a/2b |
| 5 | Disperbyk® 163 (Dispergieraddtiv) | 2 | 2 |
| 6 | Heucophos® ZPA (Korrosionschutzpigment) | 6,6 | 6,6 |
| 7 | Heucophos® ZPO (Korrosionschutzpigment) | 6,6 | 6,6 |
| 8 | Schwerspat EWO (Bariumsulfat - Füllstoff) | 3 | 3 |
| 9 | Luzenac® 20M2 (Talkum-Füllstoff) | 3 | 3 |
| 10 | Tronox® RKB-4 (Titandioxid-Pigment) | 3,8 | 3,8 |
| 11 | Bayferrox® 420 (Eisenoxid gelb - Pigment) | 8 | 8 |
| 12 | Asconium® 142 DA (Korrosionschutzinhibitor) | 1,9 | 1,9 |
| 13 | BYK® 331 (10%ig in Methyoxypropylacetat) (Verlaufadditiv) | 0,4 | 0,4 |
| 14 | Tinuvin® 292 (50%ig in Methoxypropylacetat) (HALS Lichtschutzmittel) | 2,4 | 2,4 |
| | Zwischensumme Komponente I | **75,5** | **70** |
| | | | |
| | **Komponente II** | | |
| 15 | Desmodur® ultra N 3600 (80%ig in Methoxypropylacetat: Butylacetat (1:1)) (Polyisocyanat) | **24,5** | |
| 16 | Desmodur® ultra N 3600 Desmodur® 2873, 1:1 (Polyisocyanat: silanmodifiziertes Polyisocyanat) | | **30** |
| | 80%ig in Methoxypropylacetat: Butylacetat (1:1) | | |
| | Summe | **100** | **100** |
| | NCO:NH Verhältnis 1,1:1 | | |

Zur Herstellung der Primerkomponente I werden die Bestandteile 1 bis 14 unter rühren in einer Blechdose vorgelegt. Zur Anreibung werden Glasperlerlen zugegeben und mit Hilfe eines Dispermaten (Rührer) unter Kühlung 45 Minuten angerieben und anschließend gesiebt. Die fertige Anreibung (Komponente I) muss mindestens 24 Stunden ruhen. Zur Herstellung der Härterlösung (Komponente II werden die Bestandteile aus 15 bzw. aus 16 unter Rührereinarbeitung 5 Minuten bei 2000 UPM vermischt. Die Rührereinarbeitung der Komponete I und II erfolgt 1 Minute bei 2000 UPM mittels eines Rührers. Das NCO:NH-Verhältnis beträgt 1,1:1. Anschließend erfolgt die Applikation der Primer 1a/1b und 2a/2b per Spritzapplikation (Sprühpistole Satjet, 2 bar 1,2 mm Düse) bei 23°C und 50-60% relativer Luftfeuchtigkeit jeweils in zwei unterschiedlichen Schichtdicken.

Beispiel 3 : Herstellung pigmentierter Decklack

(Tabelle 2)

| Decklackrezeptur gelb die auf den Primer 1a/1b appliziert wurde | | |
|---|---|---|
| | Beispiel | **3** |
| | **Komponente I** | |
| 1 | Desmophen® NH 1423 LF (Polyaspartik, Polyol) | 29,3 |
| 2 | SYLOSIV® A4 (Wasserfänger) | 4,3 |
| 3 | Methoxypropylacetat: Butylacetat (1:1) (Lösemittel) | 8,9 |
| 4 | BYK® A 530 (Entschäumer) | 0,4 |
| 5 | Disperbyk® 163 (Dispergieraddtiv) | 2,2 |
| 6 | Schwerspat EWO (Bariumsulfat - Füllstoff) | 4,5 |

(fortgesetzt)

| Decklackrezeptur gelb die auf den Primer 1a/1b appliziert wurde | | |
|---|---|---|
| 7 | Luzenac® 20M2 (Talkum-Füllstoff) | 3,2 |
| 8 | Tronox® RKB-4 (Titandioxid-Pigment) | 9,6 |
| 9 | Bayferrox® 420 (Eisenoxid gelb - Pigment) | 8 |
| 10 | BYK® 331 (10%ig in Methyoxypropylacetat) (Verlaufadditiv) | 0,5 |
| 11 | Tiuvin® 292 (50%ig in Methoxypropylacetat) (HALS Lichtschutzmittel) | 2,5 |
| | Zwischensumme Komponente I | **73,4** |
| | | |
| | **Komponente II** | |
| 12 | Desmodur® ultra N 3600 (80%ig in Methoxypropylacetat: Butylacetat (1:1)) (Polyisocyanat) | **26,6** |
| | Summe | **100** |
| | NCO:NH Verhältnis 1,1:1 | |

Zur Herstellung der Decklackkomponente I werden die Bestandteile 1 bis 11 unter rühren in einer Blechdose vorgelegt. Zur Anreibung werden Glasperlerlen zugegeben und mit Hilfe eines Dispermaten (Rührer) unter Kühlung 45 Minuten angerieben und anschließend gesiebt. Die fertige Anreibung (Komponente I) muss mindestens 24 Stunden ruhen. Zur Herstellung der Härterlösung (Komponente II) werden die Bestandteile aus 12 unter Rührereinarbeitung 5 Minuten bei 2000 UPM vermischt. Die Rührereinarbeitung der Komponente I und II erfolgt 1 Minute bei 2000 UPM mittels eines Rührers. Das NCO:NH-Verhältnis beträgt 1,1:1.

Beispiel 4 : Herstellung Klarlack

(Tabelle 3)

| Klarlackrezeptur die auf die Primerrezeptur 2a/2b appliziert wurde | | |
|---|---|---|
| | Beispiel | **4** |
| | **Komponente I** | |
| 1 | Desmophen® NH 1423 LF (Polyaspartik, Polyol) | 44,5 |
| 2 | BYK® 331 (10% in Butylacetat) Verlaufadditiv | 0,1 |
| 2 | Additive OF (Wasserfänger) | 3 |
| 4 | Butylacetat (Lösemittel) | 9,4 |
| | Zwischensumme Komponente I | **57** |
| | **Komponente II** | |
| 5 | Desmodur® ultra N 3600 (Polyisocyanat) | 32,7 |
| 6 | Methoxypropylacetat : Butylacetat (1:1) (Lösemittel) | 8,2 |
| 7 | Tinuvin® 292 (50% in Butylacetat) HALS-Lichtschutztmittel | 0,8 |
| 8 | Tinuvin® 384-2 (50% in Butylacetat) UV-Lichtschutzmittel | 1,3 |
| | Zwischensumme Komponente II | **43** |
| | | |
| | Summe | **100** |
| | NCO:NH Verhältnis 1,1:1 | |

Zur Herstellung der Klarlackkomponente I werden die Bestandteile 1 bis 4 unter rühren in einer Blechdose vorgelegt und 5 Minuten bei 2000 UPM vermischt. Zur Herstellung der Härterlösung (Komponente II) werden die Bestandteile 5 - 8 unter Rührereinarbeitung 5 Minuten bei 2000 UPM vermischt. Die Rührereinarbeitung der Komponete I und II erfolgt 1 Minute bei 2000 UPM mittels eines Rührers. Das NCO:NH-Verhältnis beträgt 1,1:1.

Nach Applikation der beiden Primer auf entfettete Substrate (Stahlbleche Q-Panel Typ R 48, alkalisphosphatierter Stahlbleche Gardobond® A 4976 / D 6800 / OC und Aluminium) werden auf diese jeweils nach ca. 15 Minuten der oben beschriebene pigmentierte Decklack bzw. Klarlack appliziert und bei Raumtemperatur (23°C) getrocknet. Es wurden jeweils zwei Gesamttrockenschichtdicken (Variante a = ca. 80 μm und b= ca. 140 - 150 μm) geprüft. Die Prüfergebnisse der Mehrschichtaufbauten finden sich in Tabelle 4.

Eigenschaften der Mehrschichtaufbauten:

(Tabelle 4)

| Beispiel | | | 5a | 5b | 6a | 6b |
|---|---|---|---|---|---|---|
| Applikationsbedingungen 55% Luftfeuchte, 23°C. | | | | | | |
| **Aufbau** | | | | | | |
| Primer | | | Beispiel 1a | Beispiel 1b | Beispiel 2a | Beispiel 2b |
| Decklack (TC) | | | Beispiel 3 | | - | |
| Klarlack (CC) | | | - | | Beispiel 4 | |
| Gesamttrockenschichtdicke -Varianten | | | a | b | a | b |
| *Glasplatte Gesamtschichtdicke (μm) Primer + CC (TC) (μm) Pendelhärte Glasplatte (s)* | | 1d/7d | 80<br>120/144 | 148<br>119/138 | 79<br>87/134 | 145<br>43/64 |
| | | 14d/21d | 143/143 | 134/138 | 127/148 | 50/72 |
| | | 30d / 60d | 145/151 | 137/142 | 148/167 | 76/137 |
| | | 90d | 152 | 144 | 167 | 141 |
| *Schichtdicke auf Q-Panel Typ R48 nur Primer (μm)* | | | 46 | 120 | 40 | 99 |
| *Schichtdicke auf Q-Panel Typ R48 Primer + CC (TC) (μm)* | | | 82 | 150 | 80 | 140 |
| Aufbau | *Beispiel* | | 5a | 5b | 6a | 6b |
| Primer | | | Beispiel 1a | Beispiel 1b | Beispiel 2a | Beispiel 2b |
| Decklack (TC) | | | Beispiel 3 | Beispiel 3 | | |
| Klarlack (CC) | | | | | Beispiel 4 | Beispiel 4 |
| *Gl.20°/60°/Haze Primer + CC (TC)* | | sofort | 88 / 95 / 22 | 88 / 96 / 22 | 89 / 96 / 12 | 89 / 96 / 14 |
| | | 30d | 88 / 95 / 22 | 88 / 96 / 22 | 89 / 96 / 12 | 89 / 96 / 14 |
| *Haftung* | | | | | | |
| Q-Panel Typ R 48 (Stahl) | | 1d/7d | 5 / 5 | 5 / 5 | 1 / 0 | 0 / 0 |
| | | 14d/21d | 5 / 5 | 5 / 5 | 1/2 | 0 / 0 |
| | | 30d / 60d | 5 / 5 | 5 / 5 | 1/2 | 0 / 0 |
| | | 90d | 5 | 5 | 0 | 0 |
| Aluminium | | 7d | 5 | 5 | 0 | 0 |
| | | 60d | 5 | 5 | 0 | 0 |
| | | 90d | 5 | 5 | 0 | 0 |

(fortgesetzt)

| **Aufbau** | | | | | | |
|---|---|---|---|---|---|---|
| *Wasserbeständigkeit nach 10 d Belastung* | ***Gardobond*** alkalisphosphatierter Stahl | | | | | |
| Glanz 20°/60°/ Haze | | | 76 / 91 / 120 | 78 / 93 / 140 | 86 / 95 / 20 | 86 / 95 / 28 |
| Blasenbildung (Größe / Menge) | DIN EN ISO 4628-2 | sofort | 3/2 | 3/2-3 | i.O. keine Blasen | i.O. keine Blasen |
| Haftung (Gitterschnitt) | | sofort / nach 24h | 5 | 5 | 0 | 0 |
| *Wasserbeständigkeit nach 20 d Belastung* | ***Gardobond*** alkalisphosphatierter Stahl | | | | | |
| Blasenbildung (Größe / Menge) DIN EN ISO 4628-2 | | sofort / nach 24 h | 3/3 // 3/3. | 5/2-3 // 4/2-3 | i.O. keine Blasen | i.O. keine Blasen |
| Haftung (Gitterschnitt) | | n.1h / nach 24 h | 5 / 5 | 5 / 5 | 0 | 0 |
| *Kondenswassertest DIN EN ISO 6270-2 CH nach 10d* | ***Gardobond*** alkalisphosphatierter Stahl | | | | | |
| Blasenbildung 1h nach Testende | | | 5/3 | 5/3 | 2-3/3 | 2-3/3 |
| Blasenbildung 24h nach Testende | | | 5/3 | 5/3 | 2-3/3 | 2-3/3 |
| Haftung 1h nach Testende | | | 5 | 5 | 0 | 0 |
| Haftung 24h nach Testende | | | 5 | 5 | 0 | 0 |
| | ***Gardobond*** alkalisphosphatierter Stahl | | | | | |
| *Salzspühtest nach 10d (DIN EN ISO 9227)* | | ***Gardobond 2mm Ritz*** | | | | |
| Enthaftung am Ritz (mm) | | | 23 | >45 | 10 | 10 |
| minimal (mm) | | | 22 | - | 8 | 6 |
| maximal (mm) | | | 25 | - | 11 | 12 |
| Haftung 1h nach Testende | | | 5 | 5 | 0 | 0 |
| Haftung 24h nach Testende | | | 5 | 5 | 0 | 0 |
| *Salzspühtest nach 20d (DIN EN ISO 9227)* | | ***Gardobond 1 mm Ritz*** | | | | |
| Enthaftung am Ritz (mm) | | | 26 | 28 | 14 | 9 |
| minimal (mm) | | | 22 | 15 | 10 | 6 |
| maximal (mm) | | | 40 | 40 | 16 | 11 |
| Haftung 1h nach Testende | | | 5 | 5 | 0 | 0 |
| Haftung 24h nach Testende | | | 5 | 5 | 0 | 0 |
| *Salzspühtest nach 20d (DIN EN ISO 9227)* | | ***Gardobond 2mm Ritz*** | | | | |
| Enthaftung am Ritz (mm) | | | 22 | >45 | 10 | 15 |
| minimal (mm) | | | 15 | - | 5 | 10 |
| maximal (mm) | | | 42 | - | 16 | 17 |

(fortgesetzt)

| Aufbau | | | | | | |
|---|---|---|---|---|---|---|
| Haftung 1h nach Testende | | | 5 | 5 | 0 | 0 |
| Haftung 24h nach Testende | | | 5 | 5 | 0 | 0 |
| ***Kurzbewitterung*** | | | | | | |
| **UV-B-Test** | Glanz 20° / 60° | Start | 87 / 92 | 88 / 93 | 88 / 93 | 88 / 92 |
| nach DIN EN ISO 16474/3 Verfahren C Zyklus 4 | | 500h | 49 / 82 | 51 / 84 | **87 / 94** | **89 / 94** |
| | | 1000h | 29 / 71 | 35 / 74 | **87 / 94** | **89 / 94** |
| **UV-A Test** | Glanz 20° / 60° | Start | 87 / 93 | 88 / 93 | 88 / 93 | 86 / 91 |
| nach DIN EN ISO 16474/3 Verfahren A Zyklus 1 | | 1000h | 46 / 81 | 49 / 82 | 88 / 94 | 88 / 94 |
| **Kurzbewitterung (Xenonbogenlampe)** | Glanz 20° / 60° | Start | 87 / 92 | 89 / 93 | 87 / 92 | 89 / 93 |
| nach DIN EN ISO 16474/2 Verfahren A, Zykl. 1 | | 1000h | 37/76 | 39/78 | **89/94** | **90/94** |

Folgende Prüfungen wurden durchgeführt:

- Bestimmung Pendeldämpfungsprüfung (Pendelhärte) nach DIN EN ISO 1522.
- Bestimmung der Haftung per Gitterschnitt nach DIN EN ISO 2409 (Cross Cut Test), Gitterschnitt-Kennwerte: Einstufung von GT0 - GT5 beschreibt das Schadensbild und gibt einen prozentualen Bereich der abgeplatzten Beschichtungsfläche an.
- Die Bestimmung der Wasserbeständigkeit wurde durch Eintauchen der Testbleche in Leitungswasser bei Raumtemperatur (23°C) durchgeführt und nach 10 Tagen bzw. 20 Tagen Belastung entsprechend geprüft.
- Kondenswassertest nach DIN EN ISO 6270-2 CH.
- Salzsprühtest nach DIN EN ISO 9227.
- Bestimmung der Blasenbildung (Größe / Menge) nach DIN EN ISO 4628-2.
- Kurzbewitterung nach DIN EN ISO 16474/3 Verfahren C Zyklus 4, nach DIN EN ISO 16474/3 Verfahren A Zyklus 1 und nach DIN EN ISO 16474/2 Verfahren A, Zykl. 1.
- Bestimmung des Glanzwertes nach DIN EN ISO 2813.

Zur Bestimmung der Trockenschichtdicke von Beschichtungen auf metallischen

Substrate wurden zwei Verfahren gewählt, für die Messung auf magnetischen Substraten (Eisen) wurde das Magnetverfahren nach DIN EN ISO 2178 angewendet und für die Messung auf nichtmagnetischen Substraten (z. B. Aluminium) wurde das Wirbelstromverfahren nach DIN EN ISO 2360 angewendet. Die Bestimmung der Trockenschichtdicke auf Glas wurde mit einer Tiefenmessuhr nach DIN EN ISO 2808 durchgeführt.

Man erkennt aus den Werten in Tabelle 4, dass der Mehrschichtaufbau basierend auf dem erfindungsgemäßen Mehrschichtaufbau der Beispiele 6a und 6b (bestehend aus Primer 2a bzw. 2b und jeweils Klarlack 4) dem nicht erfindungsgemäßen Mehrschichtaufbau der Beispiele 5a und 5b (bestehend aus Primer 1a bzw. 1b und jeweils Decklack 3) bei sehr guter Härte, vergleichbarem Ausgangsglanz, in der Haftung bei reiner Raumtemperaturlagerung, bei der Haftung und Blasenbildung bei Wasserlagerung, bei der Haftung und Blasenbildung im Kondenswassertest, bei der Haftung und Rostunterwanderung im Salzsprühtest sowie in der Glanzhaltung in der Kurzbewitterung bei beiden gewählten Gesamttrockenschichtdicken (Variante a = ca. 80 $\mu$m und b= ca. 140 - 150 $\mu$m) deutlich überlegen ist.

## Patentansprüche

1. Schichtaufbau, umfassend oder bestehend aus mindestens eine/r teilweise gehärtete/n oder vollständig gehärtete/n Beschichtungszusammensetzung für einen pigmentierten Lack (Bp) und mindestens eine/r darauf applizierte/n Beschichtungszusammensetzung für einen Klarlack ($B_K$), wobei

i) die mindestens eine Beschichtungszusammensetzung Bp folgende Komponenten enthält:

A) mindestens eine Polyasparaginsäureester-haltige Komponente, enthaltend

A1) einen oder mehrere Polyasparaginsäureester der allgemeinen Formel (I)

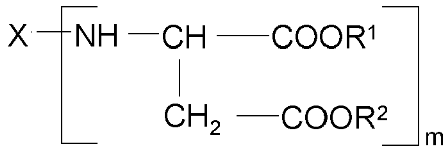

(I),

in welcher

X für einen m-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs von $\geq$ 60 bis $\leq$ 6000 g/mol erhalten werden kann, und der weitere, gegenüber Isocyanatgruppen reaktive und/oder bei Temperaturen bis 100°C inerte funktionelle Gruppen enthalten kann,
$R^1$ und $R^2$ für gleiche oder verschiedene organische Reste, mit je 1 bis 18 Kohlenstoffatomen stehen,
m für eine ganze Zahl >1 steht,

und
A2) gegebenenfalls einen oder mehrere Polyasparaginsäureester mit primärer Aminogruppe der allgemeinen Formel (II)

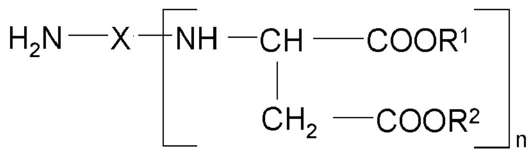

(II),

in welcher

n für m-1 steht,
X und die Reste $R^1$ und R2 die oben genannten Bedeutungen haben,

und
A3) gegebenenfalls einen oder mehrere Fumarsäuredialkylester,

B) gegebenenfalls mindestens eine, von A verschiedene, gegenüber Isocyanatgruppen reaktionsfähige Komponente,
C) mindestens ein silanfunktionelles Polyisocyanat, enthaltend mindestens eine Silangruppe der allgemeinen Formel (III)

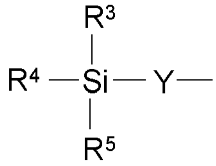

(III),

in welcher

$R^3$, $R^4$ und $R^5$ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
Y für einen linearen oder verzweigten organischen Rest mit mindestens 2 Kohlenstoffatomen steht, der gegebenenfalls bis zu 2 Iminogruppen (-NH-) enthalten kann,

D) gegebenenfalls mindestens ein, von C verschiedenes, Polyisocyanat
E) mindestens ein Pigment,
F) gegebenenfalls weitere Hilfs- und Zusatzstoffe,
und

ii) die mindestens eine Beschichtungszusammensetzung $B_K$ folgende Komponenten enthält:

G) mindestens eine Polyasparaginsäureester-haltige Komponente, enthaltend

G1) einen oder mehrere Polyasparaginsäureester der allgemeinen Formel (IV)

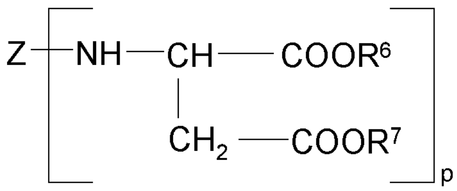

(IV),

in welcher

Z für einen p-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs von ≥ 60 bis ≤ 6000 g/mol erhalten werden kann, und der weitere, gegenüber Isocyanatgruppen reaktive und/oder bei Temperaturen bis 100°C inerte funktionelle Gruppen enthalten kann,
$R^6$ und $R^7$ für gleiche oder verschiedene organische Reste, mit je 1 bis 18 Kohlenstoffatomen stehen,
p für eine ganze Zahl >1 steht,

und
G2) gegebenenfalls einen oder mehrere Polyasparaginsäureester mit primärer Aminogruppe der allgemeinen Formel (V)

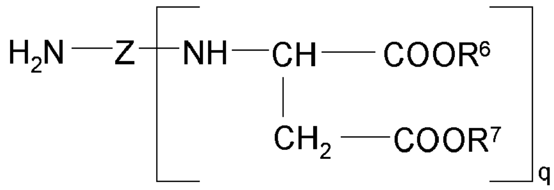

(V),

in welcher

q für p-1 steht,
Z und die Reste $R^6$ und $R^7$ die oben genannten Bedeutungen haben,

und
G3) gegebenenfalls einen oder mehrere Fumarsäuredialkylester,

H) gegebenenfalls mindestens eine, von G verschiedene, gegenüber Isocyanatgruppen reaktionsfähige Komponente,
I) mindestens ein Polyisocyanat,
J) gegebenenfalls Hilfs- und Zusatzstoffe.

**2.** Schichtaufbau gemäß Anspruch 1, wobei silanfunktionelle Polyisocyanate (C) eingesetzt werden, die erhältlich sind durch Umsetzung

(C1) mindestens eines Polyisocyanats mit

($C2_1$) mindestens einer gegenüber Isocyanatgruppen reaktiven Verbindung der allgemeinen Formel (IX)

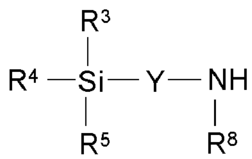

(IX),

in welcher

$R^3$, $R^4$, $R^5$ und Y die für Formel (III) genannte Bedeutung haben, und
$R^8$ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen steht, oder für

i) einen Rest der Formel

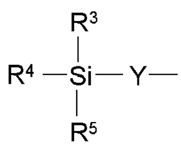

steht, in welchem $R^3$, $R^4$ und $R^5$ und Y die für Formel (III) genannte Bedeutung haben,
ii) einen Rest der Formel

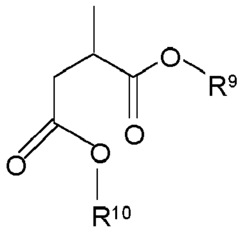

steht, in welchem $R^9$ und $R^{10}$ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen können,
iii) einen Rest der Formel

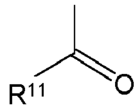

steht, in welcher $R^{11}$ für Wasserstoff oder einen gesättigten linearen oder verzweigten, aliphatischen oder cycloaliphatischen organischen Rest mit 1 bis 8 Kohlenstoffatomen steht,

oder der allgemeinen Formel (X)

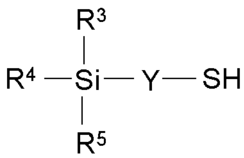

(X),

in welcher $R^3$, $R^4$ und $R^5$ die für Formel (III) genannte Bedeutung haben und

Y für einen linearen oder verzweigten organischen Rest mit mindestens 2 Kohlenstoffatomen steht,

oder
($C2_2$) mindestens einem -aus der Reaktion von Aminosilanen mit cyclischen Carbonaten bzw. Lactonen erhältlichen- Silangruppen aufweisenden Hydroxyurethan und/oder Hydroxyamid.

**3.** Schichtaufbau gemäß Anspruch 1 oder 2, wobei das Gewichtsverhältnis von Komponente C zu Komponente D 2:98 bis 1:0, bevorzugt 1:1 beträgt.

**4.** Schichtaufbau gemäß einem der Ansprüche 1 bis 3, wobei der Anteil der Pigmente E in der Beschichtungszusammensetzung Bp $\geq$ 0,1 bis $\leq$ 50 Gew.-% , bevorzugt $\geq$ 5 bis $\leq$ 40 Gew.-%, ganz besonders bevorzugt $\geq$ 10 bis $\leq$ 30 Gew.-%, jeweils bezogen auf das Gesamtgewicht der Beschichtungszusammensetzung $B_P$, beträgt.

**5.** Schichtsystem, umfassend ein Substrat, mindestens eine auf mindestens einen Teil des Substrats aufgetragene, teilweise gehärtete oder vollständig gehärtete Beschichtungszusammensetzung für einen pigmentierten Lack (Bp) und mindestens eine darauf applizierte Beschichtungszusammensetzung für einen Klarlack ($B_K$), wobei die Zusammensetzung der mindestens einen Beschichtungszusammensetzung Bpder Beschreibung in den Ansprüchen 1 bis 4 entspricht und die Zusammensetzung der mindestens einen Beschichtungszusammensetzung $B_K$ der Beschreibung in Anspruch 1 entspricht.

**6.** Die Erfindung betrifft weiterhin ein Verfahren zum Herstellen eines Schichtaufbaus auf einem Substrat, welches mindestens folgende Schritte umfasst:

i) Auftragen mindestens einer Beschichtungszusammensetzung für einen pigmentierten Lack (Bp) auf mindestens einen Teil eines zu beschichtenden Substrats,
ii) Auftragen mindestens einer Beschichtungszusammensetzung für einen Klarlack ($B_K$) auf mindestens einen Teil der sich auf dem Substrat befindenden Schicht bzw. des sich auf dem Substrat befindenden Schichtaufbaus aus i), und
iii) vollständiges Härten des sich auf dem Substrat befindenden Schichtaufbaus aus ii), wobei die Zusammensetzung der mindestens einen Beschichtungszusammensetzung Bp der Beschreibung in den Ansprüchen 1 bis 4 entspricht und die Zusammensetzung der mindestens einen Beschichtungszusammensetzung $B_K$ der Beschreibung in Anspruch 1 entspricht.

**7.** Verfahren gemäß Anspruch 6, wobei dem Härtungsschritt iii) wenigstens ein weiterer Härtungsschritt vorausgeht, der zwischen der Auftragung zweier aufeinanderfolgender Schichten erfolgt und zu einer nicht vollständigen oder einer vollständigen Härtung der sich zum Zeitpunkt dieses Härtungsschritts auf dem Substrat befindenden Schichten führt.

**8.** Verfahren gemäß Anspruch 6, wobei dem Härtungsschritt ein Ablüftungsschritt vorausgeht, bzw. Verfahren gemäß Anspruch 7, wobei wenigstens einem der Härtungsschritte ein Ablüftungsschritt vorausgeht.

**9.** Verfahren gemäß einem der Ansprüche 6 bis 8, wobei die Härtungstemperaturen -20 bis 160°C, bevorzugt -20 bis 100°C, besonders bevorzugt -10 bis 80°C, ganz besonders bevorzugt 0 bis 60°C betragen.

**10.** Schichtaufbau auf einem Substrat, erhältlich nach einem Verfahren gemäß einem der Ansprüche 6 bis 9.

**11.** Verfahren gemäß einem der Ansprüche 6 bis 9 oder Schichtaufbau gemäß Anspruch 10, wobei es sich bei den Substraten um metallische Substrate, bevorzugt um Stahl, beispielsweise eisen- oder alkalisphosphatierter Stahl, um Zink oder Aluminium handelt.

**12.** Verwendung eines Schichtaufbaus gemäß einem der Ansprüche 1 bis 4 bei der Beschichtung im Bereich des Korrosionschutzes, der allgemeinen Industrielackierung, der Automobil-, Schiffs- und Flugzeuglackierung, der Lackierung von Schienenfahrzeugen und kommunalen Nutzfahrzeugen oder im Bereich ACE (Agriculture, Construction and Earth moving equipment).

Europäisches Patentamt
European Patent Office
Office européen des brevets

# EUROPÄISCHER RECHERCHENBERICHT

Nummer der Anmeldung
EP 21 21 5960

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 862 957 A1 (COATINGS FOREIGN IP CO LLC [US]) 22. April 2015 (2015-04-22)<br>* Absatz [0004] *<br>* Absatz [0029] - Absatz [0033] *<br>* Zusammenfassung; Ansprüche 1-15; Beispiel 1; Tabellen 1-6 *<br>----- | 1-12 | INV.<br>C09D5/00 |
| X | US 2016/160356 A1 (WISSING KLAUS [DE]) 9. Juni 2016 (2016-06-09)<br>* Absatz [0008] *<br>* Absatz [0042] - Absatz [0058] *<br>* Zusammenfassung; Ansprüche 1-20; Beispiel 1; Tabellen 1-6 *<br>----- | 1-12 | |
| X | WO 2011/022680 A2 (NOVAN INC [US]; STASKO NATHAN [US] ET AL.) 24. Februar 2011 (2011-02-24)<br>* Absatz [0072] - Absatz [0076] *<br>* Absatz [0159] *<br>* Zusammenfassung; Ansprüche 10, 11; Beispiele 1-11; Tabellen 1-6 *<br>----- | 1-12 | |

| RECHERCHIERTE SACHGEBIETE (IPC) |
|---|
| C09D |

Der vorliegende Recherchenbericht wurde für alle Patentansprüche erstellt

2

| Recherchenort | Abschlußdatum der Recherche | Prüfer |
|---|---|---|
| München | 27. Mai 2022 | Glomm, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 21 5960

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2022

| Im Recherchenbericht angeführtes Patentdokument | Datum der Veröffentlichung | Mitglied(er) der Patentfamilie | Datum der Veröffentlichung |
|---|---|---|---|
| EP 2862957 A1 | 22-04-2015 | CN 104549944 A | 29-04-2015 |
| | | EP 2862957 A1 | 22-04-2015 |
| US 2016160356 A1 | 09-06-2016 | KEINE | |
| WO 2011022680 A2 | 24-02-2011 | BR 112012003804 A2 | 01-09-2015 |
| | | CA 2771389 A1 | 24-02-2011 |
| | | CN 102695528 A | 26-09-2012 |
| | | DK 2467173 T3 | 29-07-2019 |
| | | EP 2467173 A2 | 27-06-2012 |
| | | US 2012136323 A1 | 31-05-2012 |
| | | US 2018214598 A1 | 02-08-2018 |
| | | WO 2011022680 A2 | 24-02-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0403921 A
- EP 0639628 A
- EP 0667362 A
- EP 0689881 A
- US 5214086 A
- EP 0699696 A
- EP 0596360 A
- EP 0893458 A
- DE 19701835
- US 5243012 A
- WO 2010112157 A1
- KR 20180036827 A
- WO 2014138052 A1
- WO 2019057621 A1
- WO 20190576217 A1
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 870400 A
- DE 953012 A
- DE 1090196 A
- EP 0546399 A
- CN 105218780
- CN 103881050
- CN 101717571
- US 3183112 A
- EP 0416338 A
- EP 0751163 A
- EP 1378529 A
- EP 1378530 A
- EP 2174967 A
- JP 63260915 B
- JP 56059828 B
- US 4788310 A
- US 4826915 A
- EP 2892905 B
- WO 15189164 A
- WO 16146474 A
- SU 295764 A
- US 4104296 A
- EP 0833830 A
- WO 1998018844 A
- GB 0994890 A
- US 3769318 A
- EP 0000194 A
- EP 0649866 A
- EP 2014692 A
- WO 05058996 A
- WO 2007033786 A
- WO 2006042658 A
- WO 2008074489 A
- WO 2009077180 A
- DE 2356768 B1
- EP 0896009 A
- EP 0962455 A
- WO 2014016019 A
- WO 9422968 A
- EP 0276501 A
- EP 0249201 A
- WO 9712945 A


### In der Beschreibung aufgeführte Nicht-Patentliteratur


- **HAUBEN WEYL.** *Meth. d. Org. Chemie,* 1957, vol. 11 (1), 272
- *Usp. Khim.,* 1969, vol. 38, 1933
- **JUSTUS LIEBIGS.** *Annalen der Chemie,* 1949, vol. 562, 75-136
- *J. Prakt. Chem.,* 1994, vol. 336, 185-200
- Pigmente, Füllstoffe, Farbstoffe. **H. KITTEL.** Lehrbuch der Lacke und Beschichtungen. Verlag W.A. Colomb in der Heenemann GmbH, 1974, vol. II, 17-265
- **A. VALET.** Lichtschutzmittel für Lacke. Vincentz Verlag, 1996
- Lösemittel, Weichmacher, Additive, Zwischenprodukte. **H. KITTEL.** Lehrbuch der Lacke und Beschichtungen. Verlag W.A. Colomb in der Heenemann GmbH, 1976, vol. III, 237-398
- **JUSTUS LIEBIGS.** Annalen der Chemie. 1949, vol. 562, 75-136